# EUROPEAN PATENT SPECIFICATION

(11) **EP 4 143 957 B1**
(45) Date of publication and mention of the grant of the patent: **18.11.2026**
(21) Application number: 21721919.5
(22) Date of filing: 28.04.2021
(51) Int. Cl.: H02M 1/12, H02M 1/42, H02M 3/158, H02M 7/219, H02M 7/5387, H02M 7/797, H02M 1/00, H02M 7/483

(54) **ELECTRICAL POWER CONVERTER**
ELEKTRISCHER LEISTUNGSWANDLER
CONVERTISSEUR DE COURANT ÉLECTRIQUE

(30) Priority: 28.04.2020 EP 20171937; 06.07.2020 NL 2026008
(43) Date of publication of application: 08.03.2023
(73) Proprietor: Prodrive Technologies Innovation Services B.V., 5692 EM Son en Breugel (NL)
(72) Inventor: ZHANG, Daifei, 8057 Zurich (CH); GUACCI, Mattia, 54595 Prüm (DE); KOLAR, Johann Walter, 8044 Zurich (CH); EVERTS, Jordi, 5692 EM Son en Breugel (NL)
(74) Representative: Arnold & Siedsma
(86) International application number: PCT/EP2021/061203
(87) International publication number: WO 2021/219761

(56) References cited:
- AT-A1- 516 643
- US-A1- 2013 235 626
- NADERI ROOZBEH ET AL: "Dual Flying Capacitor Active-Neutral-Point-Clamped Multilevel Converter", IEEE TRANSACTIONS ON POWER ELECTRONICS, INSTITUTE OF ELECTRICAL AND ELECTRONICS ENGINEERS, USA, vol. 31, no. 9, 1 September 2016 (2016-09-01), pages 6476 - 6484, XP011604397, ISSN: 0885-8993, [retrieved on 20160324], DOI: 10.1109/TPEL.2015.2501401
- GUACCI MATTIA ET AL: "Novel Three-Phase Two-Third-Modulated Buck-Boost Current Source Inverter System Employing Dual-Gate Monolithic Bidirectional GaN e-FETs", 2019 IEEE 10TH INTERNATIONAL SYMPOSIUM ON POWER ELECTRONICS FOR DISTRIBUTED GENERATION SYSTEMS (PEDG), IEEE, 3 June 2019 (2019-06-03), pages 674 - 683, XP033601862, DOI: 10.1109/PEDG.2019.8807580

## Description

### Technical field

The present invention is related to electrical converters allowing to convert between a three phase AC signal and a DC signal. The electrical converter comprises an AC/DC stage and a DC/DC stage.

### Background art

High power and high efficiency battery chargers, enabling fast charging of electric vehicles (EVs), are of crucial importance for a fast growth of the EV market. Moreover, in case EV batteries serve as distributed energy storage elements to support the grid operation, EV chargers must allow bidirectional power conversion. The AC/DC front-end is a main element of an EV battery charging system, and must cover a wide output voltage range to adapt to different battery voltages.

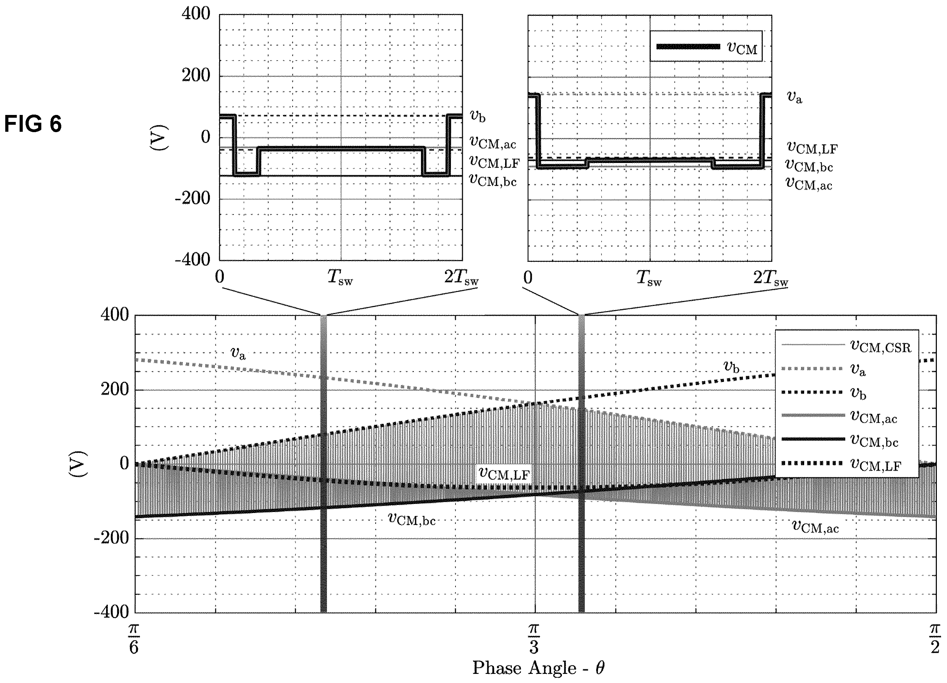

Three-phase buck-boost rectifiers are known. The buck-boost topology is simply a buck rectifier with a boost-stage added at the output end of the inductor, as illustrated in Fig. 6.5 in [3]. The two input switches rectify the AC line into a switched voltage, converted next into a DC current by the high-frequency inductor. The output switch then feeds this current into the load.

In [4] and [9], a three-phase buck-boost current source inverter is described, comprising a buck-type DC/DC converter input stage and a boost-type three-phase current DC-link inverter output stage. The current source inverter is implemented with two different modulation schemes, namely conventional pulse-width modulation and two-third pulse-width modulation (2/3-PWM). The 2/3-PWM reduces conduction and switching losses and can be applied in a subset of the buck-mode operation region. In the remainder of the buck-mode operation region, conventional PWM (3/3-PWM) and 2/3-PWM are alternated depending on the instantaneous value of the output voltage.

References:
[1] C. A. Bendall and W. A. Peterson, An EV On-Board Battery Charger, in Proc. of the IEEE Applied Power Electronics Conference and Exposition (APEC), San Jose, CA, USA, 1996.
[2] US 2012/0286740, S. Loudot, B. Briane, O. Ploix, and A. Villeneuve, Fast Charging Device for an Electric Vehicle.
[3] K. D. T. Ngo, Topology and Analysis in PWM Inversion, Rectification, and Cycloconversion, Ph.D. dissertation, California Institute of Technology, May 1984.
[4] M. Guacci, D. Zhang, M. Tatic, D. Bortis, J. W. Kolar, Y. Kinoshita, H. Ishida, Three-Phase Two-Third-PWM Buck-Boost Current Source Inverter System Employing Dual-Gate Monolithic Bidirectional GaN e-FETs, CPSS Transactions on Power Electronics and Applications, vol. 4, no. 4, pp. 339-354, December 2019.
[5] M. Baumann, J. W. Kolar, A Novel Control Concept for Reliable Operation of a Three-Phase Three-Switch Buck-Type Unity-Power-Factor Rectifier With Integrated Boost Output Stage Under Heavily Unbalanced Mains Condition, IEEE Transactions on Industrial Electronics, vol. 52, no. 2, pp. 399-409, April 2005.
[6] Q. Lei, B. Wang, and F. Z. Peng, Unified Space Vector PWM Control for Current Source Inverter, in Proc. of the IEEE Energy Conversion Congress and Exposition (ECCE USA), Raleigh, NC, USA, 2012.
[7] D. Menzi, D. Bortis, J. W. Kolar, Three-Phase Two-Phase-Clamped Boost-Buck Unity Power Factor Rectifier Employing Novel Variable DC Link Voltage Input Current Control, Proceedings of the 2nd IEEE International Power Electronics and Application Conference and Exposition (PEAC), Shenzhen, China, November 4-7, 2018.
[8] CH 698490, J. W. Kolar, Vorrichtung zur Regelung der Teilausgangsspannungen eines Dreipunkt-Hochsetzstellers.
[9] Guacci Mattia et al.: "Novel Three-Phase Two-Third-Modulated Buck-Boost Current Source Inverter System Employing Dual-Gate Monolithic Bidirectional GaN e-FETs", 2019 IEEE 10th International Symposium on Power Electronics for Distributed Generation systems (PEDG), IEEE, 3 June 2019, pp. 674-683.

### Summary of the invention

There is a need in the art to provide a buck-boost electrical converter of the above described kind, allowing an extended converter output voltage range. There is a need in the art to provide such an electrical converter allowing improved suppression of noise at the DC-side.

According to a first aspect of the invention, there is therefore provided an electrical converter as set out in the appended claims.

An electrical converter according to the invention comprises at least three phase terminals, a first DC terminal and a second DC terminal, a first converter stage and a second converter stage, and a DC link connecting the first and second converter stages.

The first converter stage is operably coupled to the at least three phase terminals and comprises a first intermediate node and a second intermediate node, wherein the converter stage is operable to convert between an AC current at the at least three phase terminals and a first DC current at the first and second intermediate nodes. The first converter stage is advantageously implemented as a buck-type bridge converter, advantageously as a current-source converter, in particular a (bidirectional) current-source rectifier.

The second converter stage is operably coupled to the first DC terminal and the second DC terminal and comprises a third intermediate node and a fourth intermediate node. The second converter stage is operable to convert between a first DC signal, preferably a current signal, at the third and fourth intermediate nodes and a second DC signal, preferably a voltage signal, at the first and second DC terminals, wherein the second converter stage comprises a middle voltage node between the first and second DC terminals. The second converter stage is advantageously implemented as, or comprises, a boost circuit, in particular comprising a first boost circuit and a second boost circuit series stacked between the first DC terminal and the second DC terminal. The second converter stage, e.g. the boost circuit comprises a plurality of first (active) switches series connected between the third intermediate node and the fourth intermediate node. By way of example, the first boost circuit comprises at least a first one of the first switches and the second boost circuit comprises at least a second one of the first switches. Advantageously, the middle voltage node is or acts as a common node of the first and second boost circuits, e.g. the middle voltage node and the common node (midpoint) of the first and second boost circuits are coincident or connected, e.g. through a direct link, so as to be at a same electrical potential. Either one, or both the first boost circuit and the second boost circuit can be a multi-level boost circuit comprising at least three voltage nodes.

The DC link connects the first intermediate node to the third intermediate node, and the second intermediate node to the fourth intermediate node. The electrical converter further comprises a first filter stage comprising a capacitor network operably coupled to each of the three phase terminals, wherein the capacitor network comprises a star-point. The DC link comprises a common mode filter, the common mode filter comprising a common mode capacitor connecting the middle voltage node to the star-point. Advantageously, the common mode filter comprises a common mode filter choke operably coupled to the first intermediate node and the second intermediate node, the third intermediate node and the fourth intermediate node. Advantageously, the DC link comprises at least one differential mode inductor operably coupled to the first intermediate node and the third intermediate node and/or operably coupled to the second intermediate node and the fourth intermediate node.

The electrical converter topology according to the present invention combines one or more of the following advantages. First, a three-level second converter stage is employed to extend the converter output voltage range without compromising its performance, but instead reducing the occurring switching losses and/or minimizing the number of magnetic components and the size of the DC-link inductor. Second, a novel integrated common mode (CM) filter is applied to suppress the CM noise at the DC-side.

Advantageously, the control structure is capable to seamlessly transition between conventional 3/3-PWM and 2/3-PWM [6].

As an advantage, the electrical converter according to aspects of the invention can be implemented with a control structure as discussed in this document capable to automatically select the optimal operating modes for different output voltage values. Compared to the conventional voltage source approach, the converter system introduced herein offers several advantages, i.e. a reduction of switching losses enabled by a variable DC-link current control strategy (synergetic control) and by a sinusoidally varying switched voltage.

Accordingly, in one advantageous aspect, the present disclosure provides a three-phase current DC-link split-output buck-three-level-boost AC/DC converter, formed by a three-phase buck-type current source rectifier (CSR)-stage and a subsequent boost-type DC/DC-stage. This power converter is advantageously bidirectional and can operate under non-ideal three-phase mains conditions, e.g., in case of harmonics distortion, over- or under-voltage events, voltage dips and phase voltage interruptions. Moreover, both stages are advantageously operated synergetically to provide a wide output voltage range. Electrical converters according to the invention are as well applicable in non-isolated on-board chargers protected by an on-board ground fault circuit interrupter [1]. In this case, the switches of the traction inverter and the stator coils of the motor, already present on-board of the EV, can be used as DC/DC-stage and DC-link inductor, respectively, aiming for a compact and low-cost solution [2].

Furthermore, this invention can also be applied to other areas requiring a three-phase AC/DC PFC rectifier front-end either for providing a widely adjustable DC output/load voltage from a constant three-phase mains or for providing a constant DC output voltage despite a large tolerance of the mains voltage. An example for the latter case would be datacenter power supplies, which (besides wide input voltage range) should feature continuous power supply and sinusoidal input current also in case of a mains phase loss which is possible due to the boost output stage of the proposed system. Moreover, the system could be employed for supplying a non-isolated converter stage supplying a single-side grounded load, as frequently given for envelope tracking power supplies of linear amplifiers, e.g. used for testing purposes.

Finally, it should be highlighted, that actually two individually controlled DC outputs are generated, which could be different in reference voltage values and power delivery to the individual loads, i.e. the total power taken from the three-phase can be freely distributed to the two outputs. Accordingly, e.g. two isolated DC/DC load converters could be supplied from the two DC outputs, which would allow a design with power semiconductors of lower voltage rating and the utilization of transformers with lower turns ratio in case a low output voltage needs to be generated like for telecom applications.

According to a second aspect of the disclosure, there is provided an electric motor drive system as set out in the appended claims.

According to a third aspect of the disclosure, there is provided a battery charging system as set out in the appended claims.

According to a fourth aspect of the disclosure, there is provided a method of converting between an AC signal having at least three phases at three or more phase nodes and a DC signal at a high node and a low node. The method comprises switching by pulse width modulation between the at least three phase nodes and the high node and the low node to obtain a switched voltage signal across the high node and low node. A period of the switched voltage signal comprises a zero voltage level portion obtained by connecting the phase node having a smallest absolute instantaneous voltage value of the at least three phases of the AC signal to both the high node and the low node. The method reduces the common mode noise generated by the PWM switching without increasing switching losses or degrading a differential mode performance. Advantageously, the switched voltage signal comprises a second voltage level portion obtained by connecting the phase node having the highest instantaneous voltage value of the at least three phases of the AC signal to the high node, and connecting the phase node having the lowest instantaneous voltage value of the at least three phases of the AC signal to the low node. Advantageously, the switched voltage signal comprises a third voltage level portion obtained by connecting the phase node having the smallest absolute instantaneous voltage value to the high node, and connecting the phase node having the lowest instantaneous voltage value of the at least three phases of the AC signal to the low node, or vice versa.

According to a fifth aspect of the disclosure, there is provided a method of converting between an AC signal having at least three phases at three or more phase nodes and a DC signal at a high node and a low node. The method comprises switching by pulse width modulation between the at least three phase nodes and the high node and the low node to convert between the AC signal and the DC signal. The switching comprises switching between active states in which a connection is made between two of the at least three phases and the high node and the low node and zero states in which the high node and the low node are short circuited, in particular in which both high and low node are both connected to only one of the at least three phases. At least one, preferably all the zero states are obtained by connecting a phase of the at least three phases of the AC signal having a smallest absolute instantaneous voltage value to the high and low nodes.

The fourth and fifth aspects described above can be provided independently of the first to third aspects, or in combination. In particular, the fourth and fifth aspects can be implemented in the electrical converter according to the first aspect.

### Brief description of the figures

Aspects of the disclosure will now be described in more detail with reference to the appended drawings, wherein same reference numerals illustrate same features and wherein:

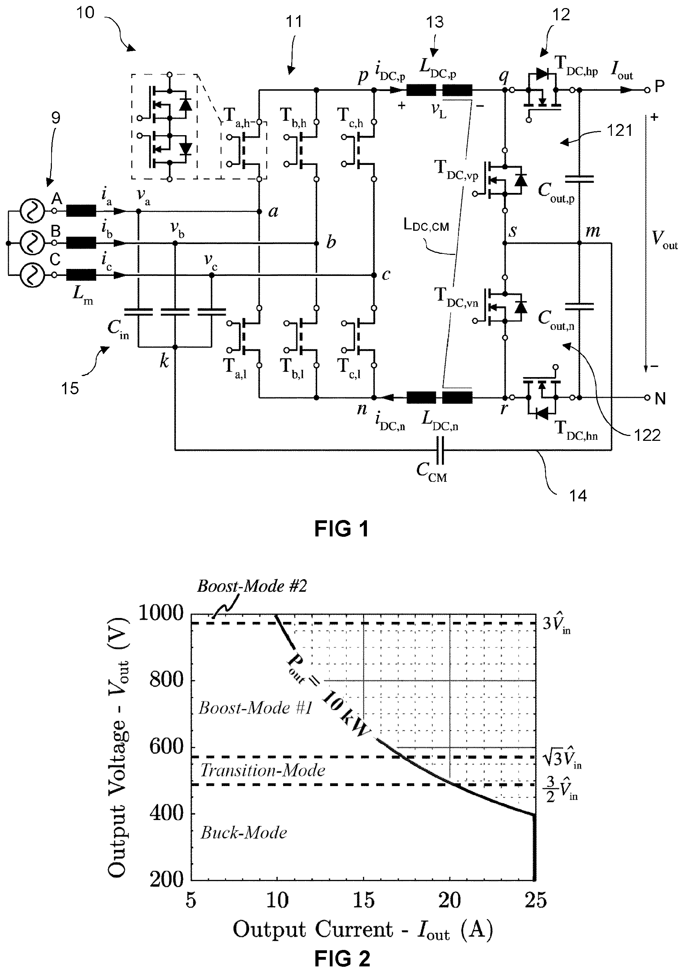

**Figure 1** represents a schematic of an exemplary embodiment of an electrical converter according to the invention implemented as a three-level (3-L) three phase (3-Φ) buck-boost (bB) current DC-link AC/DC converter system. To filter the common mode (CM) noise at the DC output port, the artificial 3-Φ neutral point k and the DC midpoint m are connected through a CM filter capacitor C_{CM}.
**Figure 2** represents Operating regions of the proposed 3-L 3-Φ bB current DC-link AC/DC converter system of Fig. 1. Depending on the required output voltage Vₒᵤₜ, different operating modes, i.e. Buck-Mode, Transition-Mode, and Boost-Mode (#1 or #2), are applied in order to minimize the switching and conduction losses, and reduce the CM noise emission. Different colour intensity indicate different output power levels.

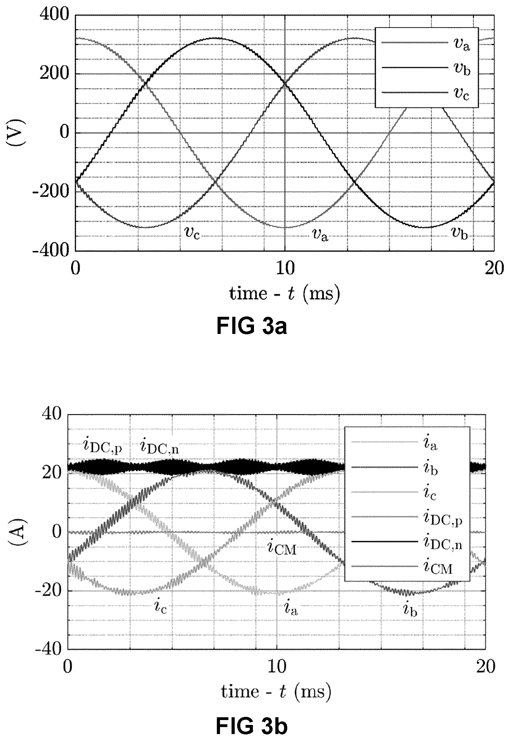

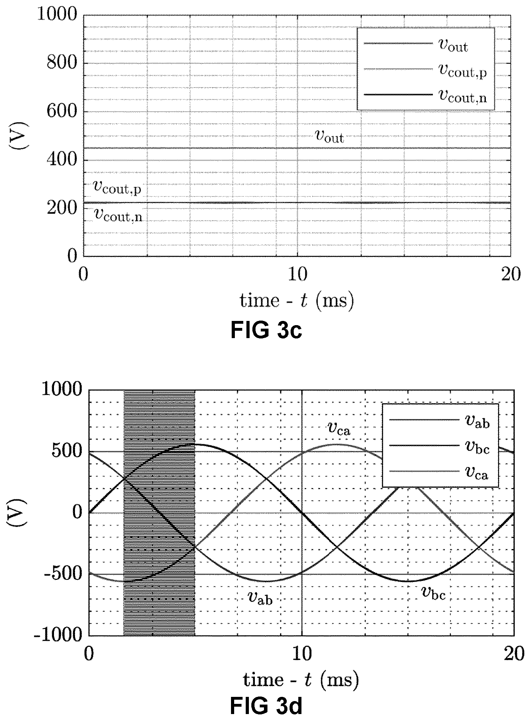

**Figure 3a****-d** represent simulated waveforms of the converter of Fig. 1 operating in *Buck-Mode* with a capacitive return connection. In particular, in **Fig. 3a** the three-phase mains voltages *v*ₐ, *v*_{b}, and *v*_{c}, in **Fig. 3b** the three-phase mains currents *i*ₐ, *i*_{b}, and *i*_{c}, the DC-link currents *i*_{DC,p} and *i*_{DC,n} and the CM current on the return connection *i*_{CM}, in **Fig. 3c** the output voltage *v*ₒᵤₜ and the output capacitor voltages *v*_{cout,p} and *v*_{cout,n}, and in **Fig. 3d** the three-phase mains line-to-line voltages *v*_{ab}, *v*_{bc}, and *v*_{ca} are shown.

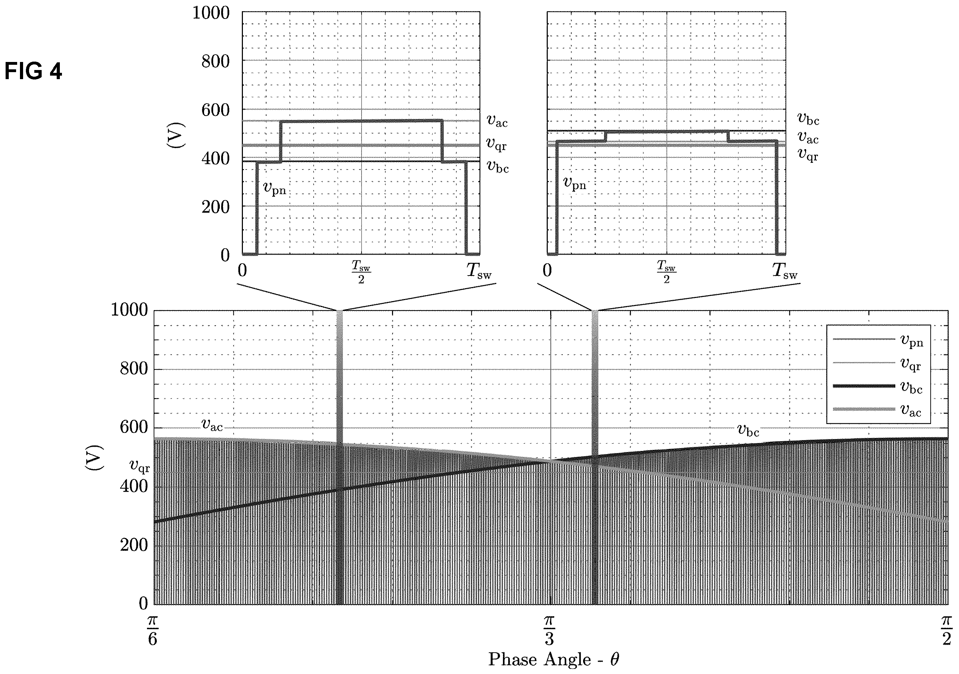

**Figure 4** represents differential mode (DM) voltages in *Buck-Mode* operation over one 60°-wide sector of the mains period defined by the three-phase mains currents, i.e. in this sector phase c has the minimum current value. In particular, *v*ₚₙ is a switched waveform alternately assuming the values of two line-to-line voltages *v*_{ac} and *v*_{bc} during the active states, and of 0V during the zero state, and *v*_{qr} is equal to *V*ₒᵤₜ. The graphs in the upper part offer a zoomed view of typical voltage waveforms within a switching period.

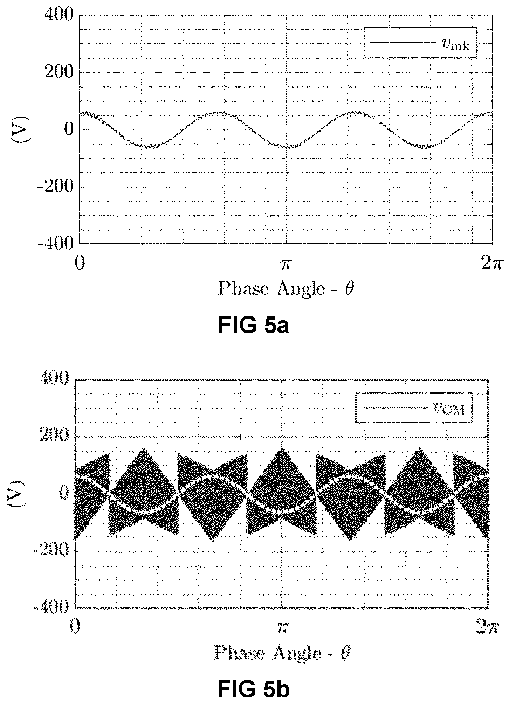

**Figure 5a** represents the CM voltage of the converter of Fig. 1 operating in the *Buck-Mode* according to an aspect of the invention, with the capacitive return connection as described in the present disclosure.
**Figure 5b** represents the CM voltage of a converter as in Fig. 1 operating in *Buck-Mode* as described herein without the return connection that is contemplated in the present disclosure (the white dotted line indicates the local average value (within one pulse period) of the switched voltage waveform *v_{CM}*).
**Figure 6** represents common mode (CM) voltages in Buck-mode operation of the converter of Fig. 1 over one 60°-wide sector of the mains period defined by the three-phase mains currents, i.e. in this sector phase *c* has the minimum current value. specifically, the CM voltage generated by the CSR-stage *v_{CM,CSR}* constituted of two active states common mode voltages ${v}_{CM , bc} = \frac{{v}_{b} + {v}_{c}}{2}$ and ${v}_{CM , ac} = \frac{{v}_{a} + {v}_{c}}{2}$ and one phase voltage *vₐ* or *v_{b}*, and low-frequency components of the generated CM voltage *v*_{CM,LF}. The graphs in the upper part offer a zoomed view of typical voltage waveforms during two switching periods.

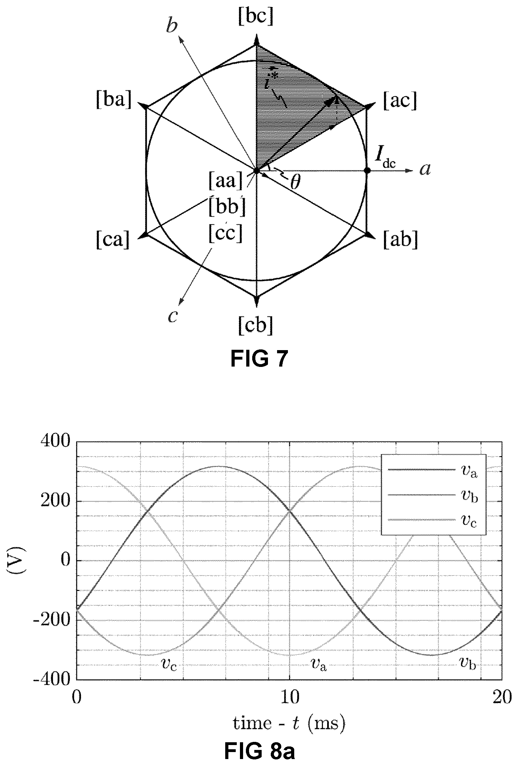

**Figure 7** represents space vector diagram of a three-phase current DC-link converter highlighting the nine states of the three-phase rectifier. The 60°-wide sector considered in **Fig. 3d** is shaded.

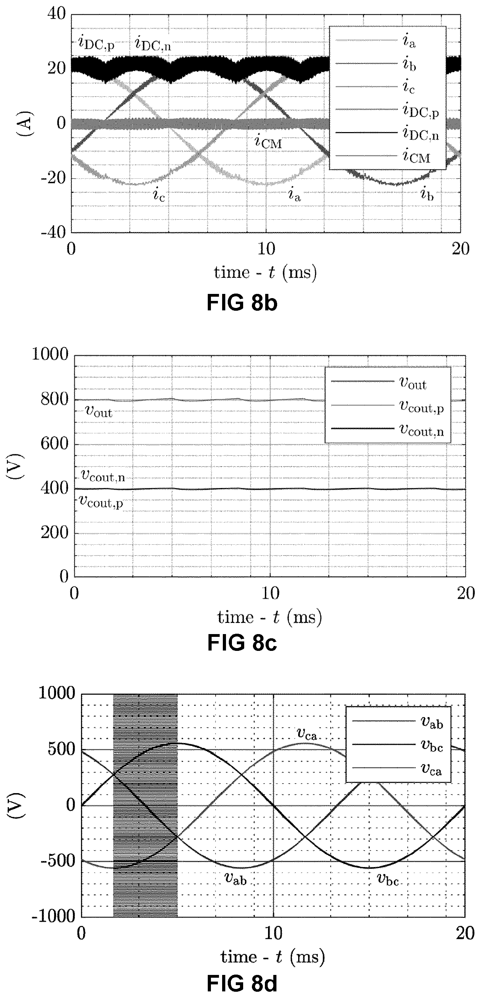

**Figure 8a****-d** represent simulated waveforms of the converter of Fig. 1 operating in *Boost-Mode* with a capacitive return connection. In particular, in **Fig.** 8a the three-phase mains voltages *v*ₐ, *v*_{b}, and *v*_{c}, in **Fig. 8b** the three-phase mains currents *i*ₐ, *i*_{b}, and *i*_{c}, the DC-link current *i*_{DC,p} and *i*_{DC,n} and the CM current in the return connection *i*_{CM}, in **Fig. 8c** the output voltage *v*ₒᵤₜ and the output capacitor voltages *v*_{cout,p} and *v*_{cout,n}, and in **Fig. 8d** the three-phase mains line-to-line voltages *v*_{ab}, *v*_{bc}, and *v*_{ca} are shown.

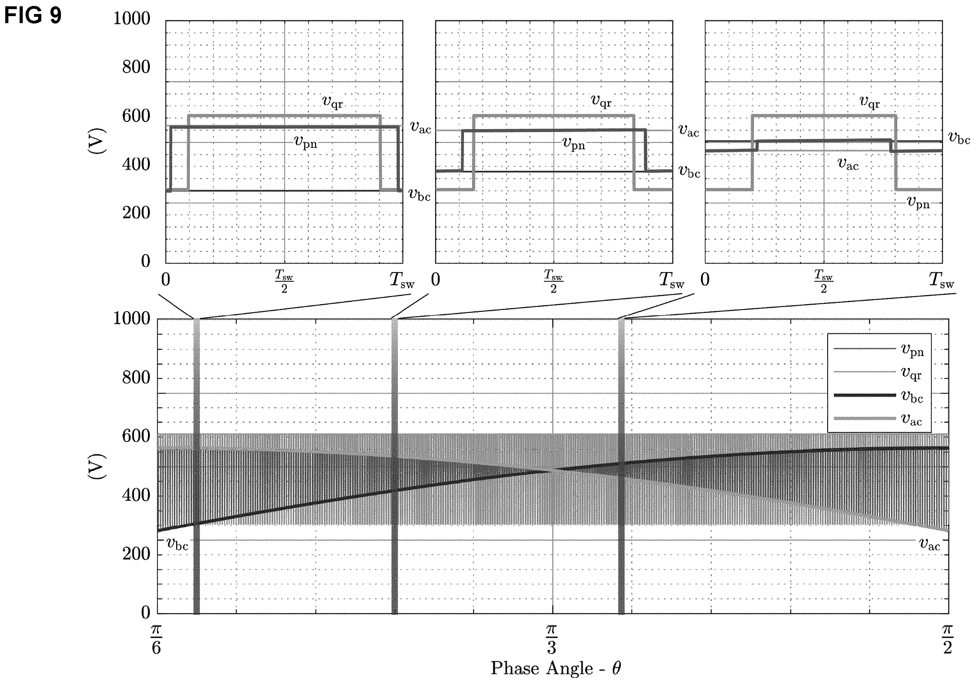

**Figure 9** represents DM voltages in *Boost-Mode #1* operation over one 60°-wide sector defined by the three-phase mains currents, i.e. in this sector phase c has the minimum current value. In particular, *v*ₚₙ is a switched waveform alternately assuming the values of two line-to-line voltages *v*_{ac} and *v*_{bc} during the active states, while *v*_{qr} switches between $\frac{{V}_{out}}{2}$ and *V*ₒᵤₜ. The graphs in the upper part offer a zoomed view of typical voltage waveforms within a switching period *T_{sw}.*

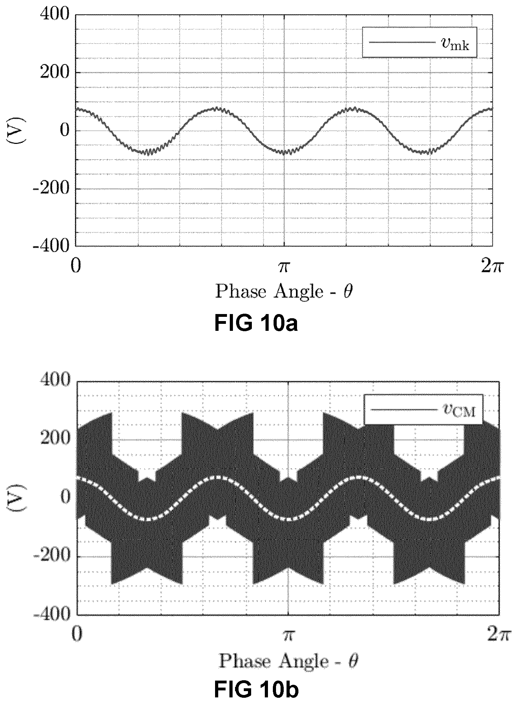

**Figure 10a** represents the CM voltage *v*_{CM} of the converter of Fig. 1 operating in *Boost-Mode #1* with the return connection according to the disclosure.
**Figure 10b** represents the CM voltage *v*_{CM} of a converter as in Fig. 1 operating in *Boost-Mode #1* without the return connection that is contemplated in the present disclosure (the white dot line indicates the local average value of the switched voltage waveform *v*_{CM}).

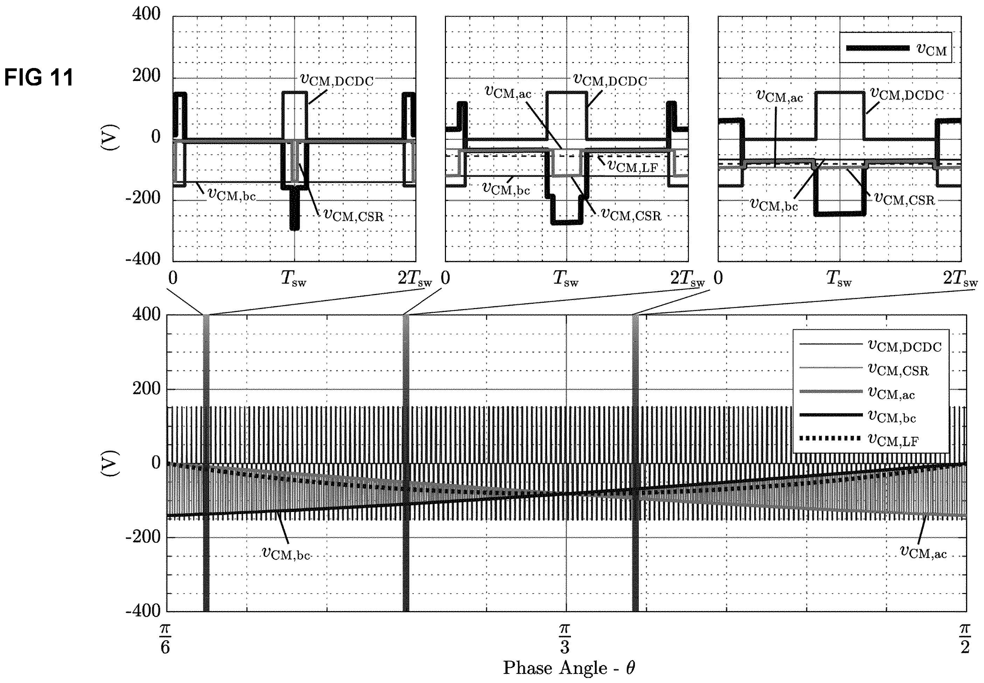

**Figure 11** represents CM voltages in Boost mode #1 operation over a 60°-wide sector defined by the three-phase mains currents, i.e. in this sector phase *c* has the minimum current value. Specifically, CM voltage generated by the CSR-stage *v_{CM,CSR}* constituted of the CM voltages of two active states ${v}_{CM , bc} = \frac{{v}_{b} + {v}_{c}}{2}$ and ${v}_{CM , ac} = \frac{{v}_{a} + {v}_{c}}{2}$ and low-frequency components of the generated CM voltage *v*_{CM,LF}. Furthermore, the CM voltage generated by the DC/DC-stage *v*_{CM,DCDC} formed by $\pm \frac{1}{4} {V}_{out}$ and 0V is demonstrated. The graphs in the upper part offer a zoomed view of typical voltage waveforms during two switching periods.

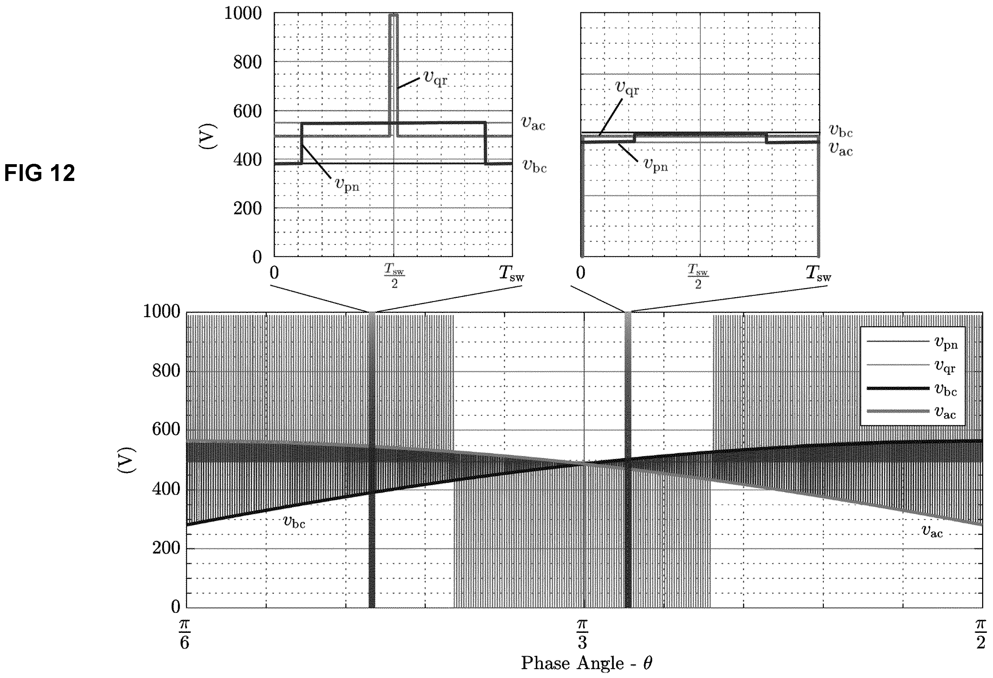

**Figure 12** represents DM voltages in *Boost-Mode #2* operation over one 60°-wide selected sector defined by the three-phase mains currents, i.e. in this sector phase *c* has the minimum current value. In particular, *v*ₚₙ is a switched waveform alternately assuming the values of two line-to-line voltages *v*_{ac} and *v*_{bc} during the active states, while *v*_{qr} switches between $\frac{{V}_{out}}{2}$ and *V*ₒᵤₜ, or $\frac{{V}_{out}}{2}$ and 0V depending on the local average value of *v*ₚₙ. The graphs in the upper part offer a zoomed view of typical voltage waveforms within a switching period *T_{sw}.*

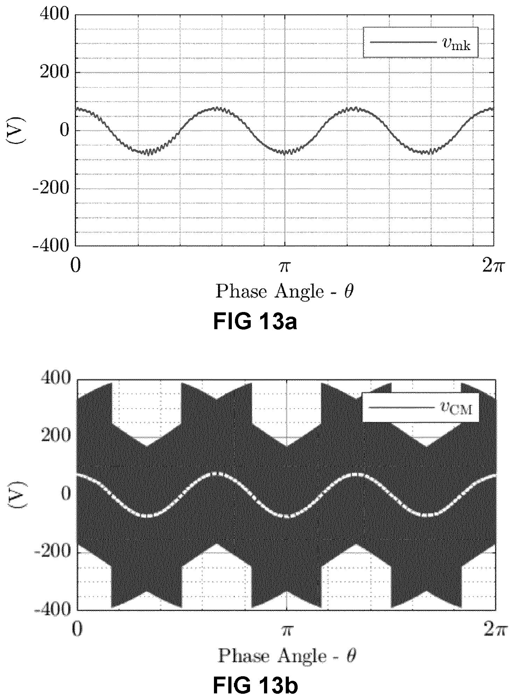

**Figure 13a** represents the CM voltage of the converter of Fig. 1 operating in *Boost-Mode* #2 with the return connection according to the disclosure.
**Figure 13b** represents the CM voltage of a converter as in Fig. 1 operating in *Boost-Mode* #2 without the return connection that is contemplated in the present disclosure (the white dotted line indicates the local average value of the switched voltage waveform *v*_{CM}).

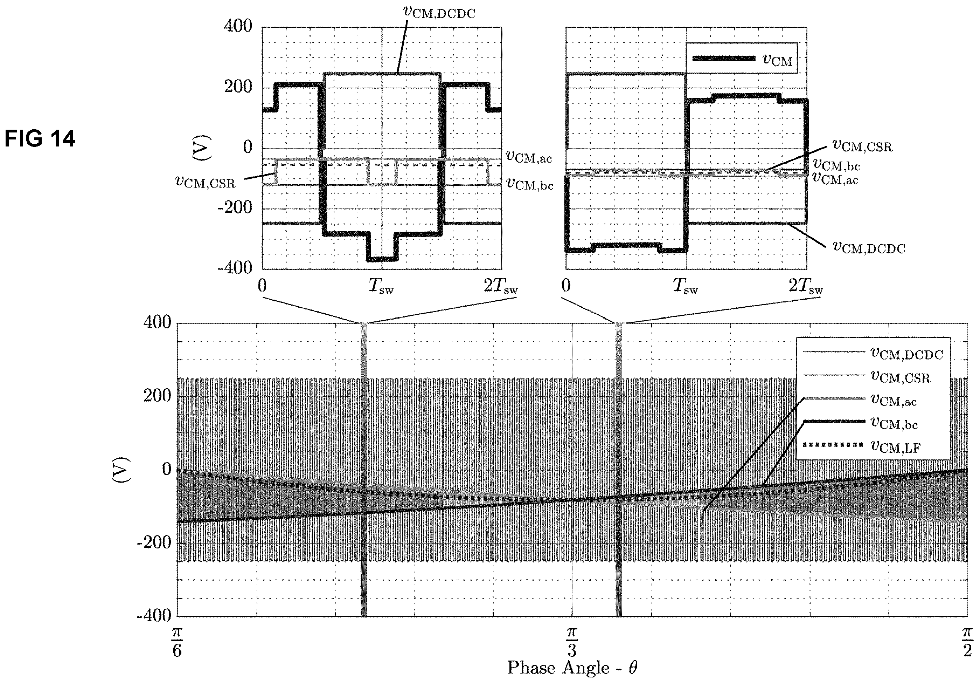

**Figure 14** represents CM voltages in Boost mode #2 operation over a 60°-wide selected sector defined by the three-phase mains currents, i.e. in this sector phase *c* has the minimum current value. Specifically, CM voltage generated by the CSR-stage *v_{CM,CSR}* constituted of the CM voltages of two active states ${v}_{CM , bc} = \frac{{v}_{b} + {v}_{c}}{2}$ and ${v}_{CM , ac} = \frac{{v}_{a} + {v}_{c}}{2}$ and low-frequency components of the generated CM voltage *v*_{CM,LF}. Furthermore, the CM voltage generated by the DC/DC-stage *v*_{CM,DCDC} formed by $\pm \frac{1}{4} {V}_{out}$ and 0V is demonstrated. The graphs in the upper part offer a zoomed view of typical voltage waveforms during two switching periods.

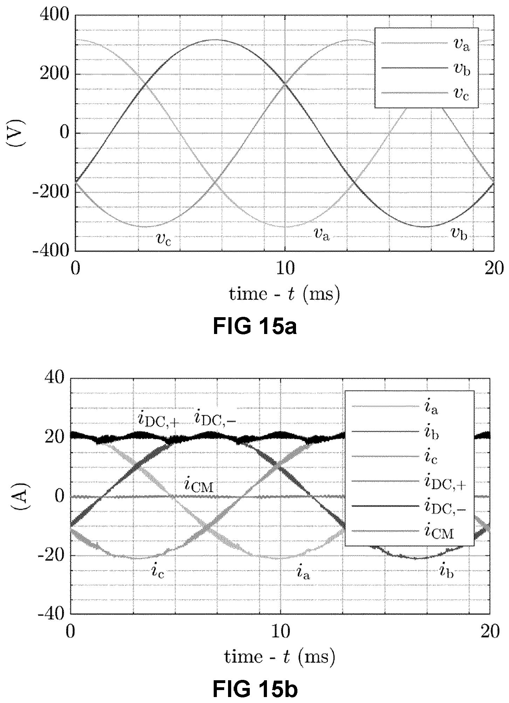

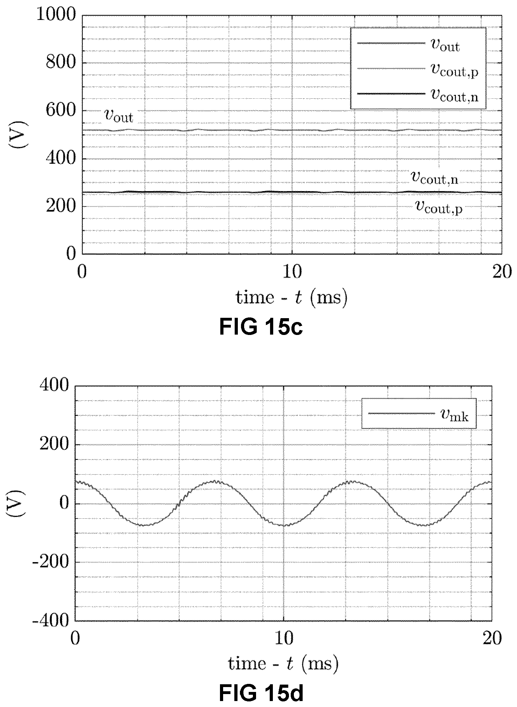

**Figure 15a****-d** represent simulated waveforms of the converter of Fig. 1 operating in *Transition-Mode* with a capacitive return connection. In particular, in **Fig. 15a** the three-phase mains voltages *v*ₐ, *v*_{b}, and *v*_{c}, in **Fig. 15b** the three-phase mains currents *i*ₐ, *i*_{b}, and *i*_{c}, the DC-link current *i*_{DC,p} and *i*_{DC,n} and the CM current on the return connection *i*_{CM}, in **Fig. 15c** the output voltage *v*ₒᵤₜ and the output capacitor voltages *v*_{cout,p} and *v*_{cout,n}, and in **Fig. 15d** the voltage *v*ₘₖ across the CM capacitor *C*_{CM} are shown.

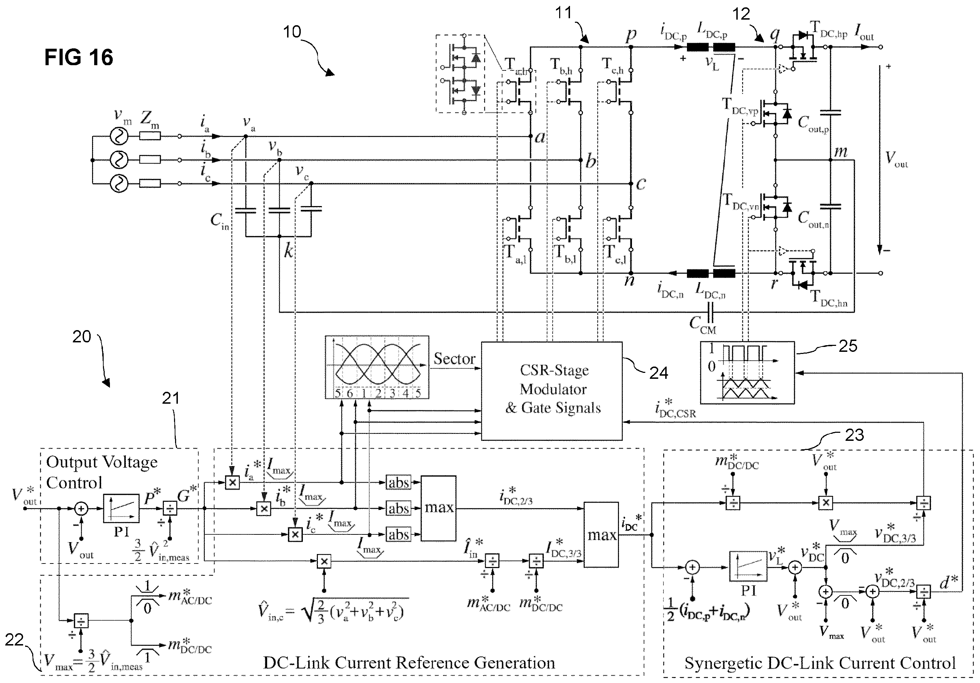

**Figure 16** represents a synergetic control structure according to an exemplary embodiment includes three main blocks, i.e. the *Output Voltage Control,* the *DCLink Current Reference Generation* and the *Synergetic DC-Link Current Control,* enabling PFC operation with sinusoidal three-phase mains currents *i*ₐ, *i*_{b}, and *i*_{c} in phase with the sinusoidal three-phase mains voltages *v*_{m,a}, *v*_{m,b}, and *v*_{m,c}, regulation of the output voltage *V*ₒᵤₜ, control of the DC-link current *i*_{DC} with synergetic operation of the three-phase buck CSR-stage and of the boost DC/DC-stage, and seamless transition between the different operating modes, i.e. *Buck-* and *Boost-mode,* and modulation schemes, i.e. 3/3-PWM and 2/3-PWM.

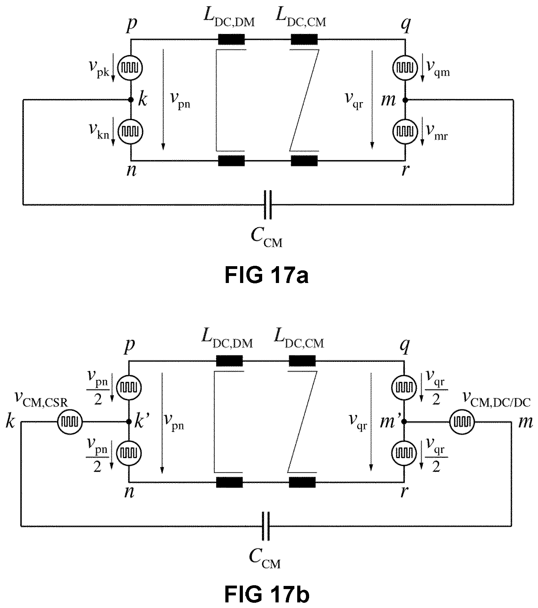

**Figure 17a** represents a CM/DM equivalent circuit of the electrical converter of Fig. 1, in which the CSR-stage and the DC/DC-stage are replaced by switched voltage sources.
**Figure 17b** represents a CM/DM equivalent circuit of the electrical converter of Fig. 1, in which the CSR-stage and the DC/DC-stage are replaced by equivalent CM/DM voltage sources.

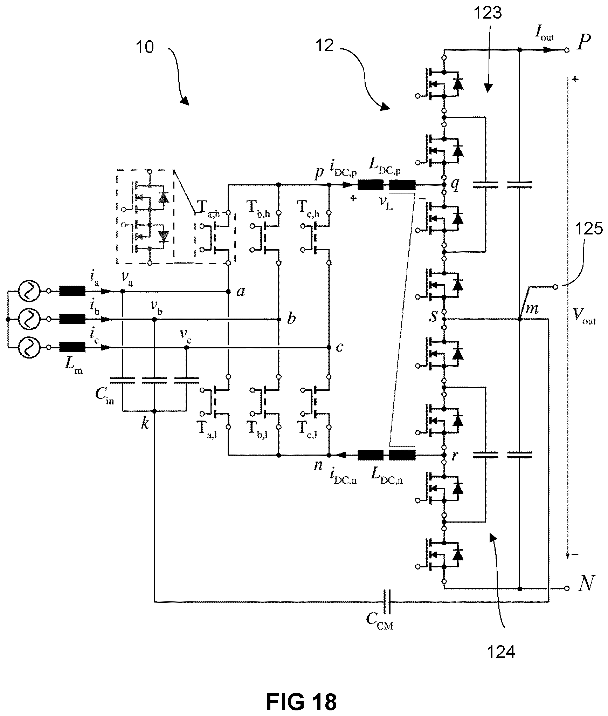

**Figure 18** represents another exemplary embodiment of an electrical converter according to the invention, which differs from the converter of Fig. 1 in that the second converter stage (DC/DC stage) is implemented as a flyback capacitor circuit.

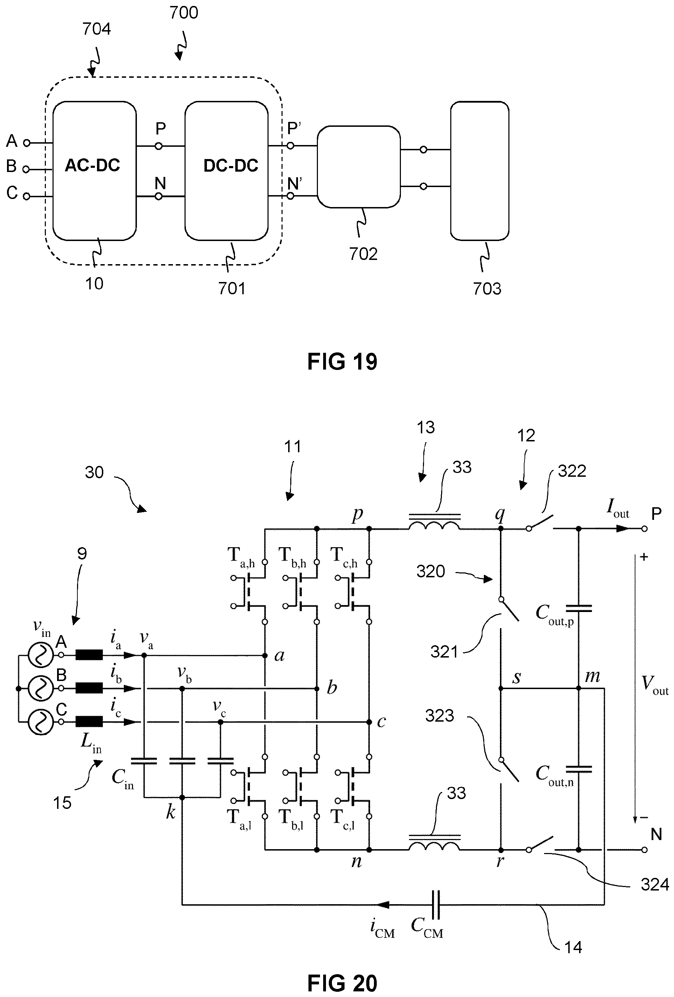

Figure 19 represents a battery charging system according to aspects of the present disclosure.
Figure 20 represents an electric motor drive system according to aspects of the present disclosure.

### Description of embodiments

Referring to **Fig. 1****,** an embodiment of an electrical converter 10 according to aspects of the present invention is implemented as a three-phase (3-Φ) current DC-link split-output buck-three-level-boost current AC/DC converter system, comprising a 3-Φ buck-type current source rectifier (CSR)-stage 11 and a subsequent three-level (3-L) boost-type DC/DC-stage 12. The CSR stage 11 comprises six semiconductor switches T_{a,h}, T_{a,l}, T_{b,h}, T_{b,l}, T_{c,h}, T_{c,l} having bidirectional voltage blocking capability, advantageously arranged in three bridge legs, and operable to switchingly connect the AC voltage nodes a, b, c to the DC nodes p, n. Each of these semiconductor switches can be formed by anti-series connecting two discrete semiconductor switches having unidirectional voltage blocking capability, possibly with external anti-parallel diodes. Alternatively, the semiconductor switches of the CSR stage 11 can be formed as monolithic bidirectional GaN field effect transistors, in particular enhanced-mode field effect transistors (e-FET).

The DC/DC stage 12 advantageously comprises an upper boost circuit 121 and a lower boost circuit 122 stacked between the DC terminals P and N. The upper and lower boost circuits 121, 122 comprise a common node s connected to the middle voltage node m such that nodes s and m are at a same electrical potential. Each of the upper and lower boost circuits can be implemented with semiconductor switches T_{DC,vp} and T_{DC,hp} for the upper boost circuit 121 and semiconductor switches T_{DC,vn} and T_{DC,hn} for the lower boost circuit 122. Other implementations are possible. By way of example, either one or both the upper and lower boost circuits can be implemented as a flyback capacitor circuit 123, 124 as shown in Fig. 18. Fig. 18 also shows the possibility of utilizing the middle voltage node m as a third DC terminal 125.

A DC-link 13 connects the CSR stage 11 and the DC/DC stage 12. In particular, the DC-link 13 connects the DC-nodes p, n of the CSR stage 11 to the input nodes q, r of the DC/DC stage 12. The DC-link 13 is implemented with a novel common mode (CM) filtering concept, comprising a capacitive return connection 14 between the input capacitors Cᵢₙ (star-point k) and the middle voltage node m of the output capacitors C_{out,p} and C_{out,n}, possibly in combination with a CM DC-link inductor L_{DC,CM}. This common mode filtering concept allows to significantly reduce the high-frequency components of CM noise.

An input filter 15 is advantageously arranged between the AC terminals A, B, C and the AC voltage nodes a, b, c. The input filter can comprise a network of input capacitors Cᵢₙ which are advantageously star-point-connected to star-point k. Furthermore, the split-output structure advantageously enables an asymmetrical loading capability at the DC output-port. **Figs. 17a** and **b** represent equivalent electrical circuits of the converter of Fig. 1. The DC-link 13 advantageously comprises a common mode inductor L_{DC,CM} and/or a differential mode inductor L_{DC,DM} which are operably coupled to nodes p and q and/or n and r.

Different possible operating modes employed in the different output voltage regions characteristic of this converter (see **Fig. 2**) are analyzed in the following with the support of simulation results.

The converter operating modes as described herein advantageously implement two different pulse-width modulation schemes for operating the switches T_{a,h}, T_{a,l}, T_{b,h}, T_{b,l}, T_{c,h}, T_{c,l} of the CSR stage 11, namely conventional pulse-width modulation (3/3-PWM) and two-third pulse-width modulation (2/3-PWM). The electrical converter 10 comprises a control unit configured to automatically select which of the two PWM schemes to use for operating the CSR stage 11 based on a desired or requested output voltage, as will be described in more detail below.

Referring to Fig. 7, six symmetric π/3-wide sectors of the AC input period are represented with six active states [bc], [ac], [ab], [cb], [ca] and [ba] and three freewheeling or zero states [aa], [bb] and [cc]. The letters 'a', 'b' and 'c' in the above refer to the voltage nodes a, b, c of Fig. 1. E.g., the state [bc] refers to a state in which node b is connected to node p by closing switch T_{b,h} and in which node c is connected to node n by closing switch T_{c,l}. Hence, in the active states, the AC input 9 is connected between the DC-link nodes p, n, whereas in the zero states, the nodes p and n are short circuited. Consequently, depending on the selected state, the DC-link input voltage vₚₙ varies between 0V (zero states) and the six input voltages ±v_{ab}, ±v_{bc} and ±v_{ac}.

In 3/3-PWM, the six semiconductor switches T_{a,h}, T_{a,l}, T_{b,h}, T_{b,l}, T_{c,h}, T_{c,l} of the CSR stage 11 are operated in order to switch between the two respective active states and the zero state. In the example of the shaded sector of Fig. 2, the switches of the CSR stage 11 are operated to switch between states [bc], [ac] and the zero state. Conventionally, the zero state [cc] is used for this sector. However, in one aspect of the invention, as will be described below in relation to buck-mode operation, the zero state used in this sector is [bb] from $\frac{π}{6}$ to $\frac{π}{3}$ and [aa] from $\frac{π}{3}$ to $\frac{π}{2}$, instead of [cc] over the whole sector. This allows to further reduce the common mode noise generated by the CSR stage.

In 2/3-PWM, a pulse-width modulation scheme is employed that is free of zero states in all sectors, i.e. all zero space vectors are eliminated and only the active states are applied. For the shaded sector of Fig. 2, this results in that only active states [bc] and [ac] are applied, without applying the zero state, e.g. [cc]. Consequently, T_{c,h} is permanently off and only T_{a,h} and T_{b,h} are alternately switched. In this case, T_{c,l} is permanently on and T_{a,l} and T_{b,l} are permanently off. The 2/3-PWM scheme allows to improve efficiency by eliminating switching losses resulting from transitioning to/from the zero state and possibly conduction losses in the DC-link due to reduced RMS value of the DC-link current. Further details regarding 2/3-PWM scheme can be found in reference [6], section III.B and IV and in [4].

***(i) Buck-Mode* Operation** ( ${V}_{out} < \frac{3}{2} {\hat{V}}_{in}$)

In buck-mode operation, the most significant waveforms of the CSR-stage and of the DC/DC-stage are reported in **Fig. 3a****-d.** In this mode, only the CSR-stage operates to step down the three-phase mains voltages to a DC output voltage lower than $\frac{3}{2} {\hat{V}}_{in}$ (where *V̂ᵢₙ* refers to the peak amplitude of the AC input voltage). The two switches T_{DC,hp} and T_{DC,hn} of the DC/DC-stage are permanently on to avoid any switching losses, as shown in **Fig. 4****,** where *v*_{qr} = *V*ₒᵤₜ.

The differential mode (DM) output voltage of the CSR-stage *v*ₚₙ is a switched waveform alternately assuming the values of two line-to-line voltages during the active states, and of 0V during the zero state, as shown in **Fig. 4****.**

In **Fig. 5a****-b,** *v*_{CM,CSR} coincides with the CM voltage *v*_{CM} generated by the converter without the return connection 14, i.e. with an open circuit between *m* and *k,* due to permanently clamping of the DC/DC stage. With a capacitive return connection, i.e. a CM capacitor *C*_{CM} connected between *m* and *k*, *C*_{CM}, together with the CM DC-link inductor *L*_{DC}, forms a CM filter. Accordingly, the low-frequency (LF), i.e. 150Hz, component of *v*_{CM} appears across *C*_{CM} (see **Fig**. **5a**), while the high-frequency (HF) component, i.e. at the switching frequency, appears across *L*_{DC,p} and *L*_{DC,n}.

In buck-mode operation, a 3/3-PWM scheme is advantageously applied. To reduce the CM noise generated by the CSR-stage 11 without increasing switching losses or degrading the DM performance, e.g. the DC-link current ripple, the zero state is advantageously implemented by connecting the AC input voltage node a, b, c having the smallest absolute instantaneous voltage value to the nodes p, n of the DC-link 13. In **Fig. 6****,** the sector where phase *c* has the minimum current value is considered as an example (this sector is shaded in Fig. 7). The zero state used in this sector is [bb] from $\frac{π}{6}$ to $\frac{π}{3}$ and [aa] from $\frac{π}{3}$ to $\frac{π}{2}$, instead of [cc] as in the PWM schemes described in literature (see **Fig. 7**).

The aforementioned PWM modulation scheme advantageously allows to have a continuous LF component of *v*_{CM} at the boundary between different sectors, in turn allowing implementation of the capacitive return connection 14. Thus, advantageously, in each sector, the LF component of *v*_{CM} should, for example, start from 0V and end at 0V. Otherwise, a current ringing will occur on the return path and also in the DC-link.

(ii) **Boost-Mode Operation** ( ${V}_{out} > \sqrt{3} {\hat{V}}_{in}$)

To achieve the boost functionality, both CSR-stage 11 and DC/DC-stage 11 are operated simultaneously. The CSR-stage 11 always operates at the maximum modulation index (equal to one) to minimize the DC-link current *i*_{DC} and the conduction losses of the whole converter 10. In boost-mode operation, a 2/3-PWM scheme is advantageously applied to the switches of the CSR stage 11. The DC-link current *i*_{DC} is controlled to a pulsed shape as shown in **Fig. 8b****.** Depending on the local average value (averaged within one pulse period) of *v*ₚₙ, the input voltage of the DC/DC-stage *v*_{qr} is a switched waveform alternately assuming the values of $\frac{{V}_{out}}{2}$ and *V*ₒᵤₜ (*Boost-Mode* #1, see **Fig. 9**), or 0V and $\frac{{V}_{out}}{2}$ (*Boost-Mode #2,* see **Fig. 12**).

Furthermore, the converter CM voltage *v*_{CM} (for *Boost-Mode #1* see **Fig. 10b****,** and for *Boost-Mode #2* see **Fig. 13b**) is generated by both the CSR-stage 11 and the DC/DC-stage 12, due to the operation of both stages in *Boost-Mode.*

Last but not least, the upper and lower output capacitors C_{out,p} and C_{out,n} are alternatively utilized when $\frac{{V}_{out}}{2}$ is required at the input 12 of the DC/DC-stage to balance the output mid-point *m.* As a result, the main frequency component of *v*_{CM,DCDC} is at half of the switching frequency, while the one of *v*_{CM,CSR} is at the three times of the mains frequency.

**(ii.1) *Boost-Mode* #1** ( $3 {\hat{V}}_{in} > {V}_{out} > \sqrt{3} {\hat{V}}_{in}$)

A three-level (3-L) DC/DC-stage 12 is advantageously considered allowing to extend the output voltage range and reduce the switching losses in the DC/DC-stage (as compared to a two-level arrangement). Due to a comparably low output voltage in the *Boost-Mode #1,* the input voltage of the DC/DC-stage *v*_{qr} is a switched waveform alternately assuming the values of $\frac{{V}_{out}}{2}$ and *V*ₒᵤₜ (*Boost-Mode #1,* see **Fig. 9**).

The CM voltage generated by the CSR-stage *v_{CM,CSR}* is a switched waveform alternately assuming the values of two CM voltages during the active states, as shown in **Fig. 11****.** Advantageously, the LF component of *v_{CM,CSR}* is identical to the LF component of *v*_{CM}, which also satisfies the aforementioned requirement for the proposed CM filtering method. The DC/DC-stage only produces HF CM components, i.e. 0V if v_{qr} = 0V or Vₒᵤₜ, $\frac{{V}_{out}}{4}$ if T_{DC,hp} and T_{DC,vn} are on, and $- \frac{{V}_{out}}{4}$ if T_{DC,hn} and T_{DC,vp} are on.

Considering the impact on CM and DM voltage-time area, the same carrier is advantageously used to generate the PWM signals of the CSR-stage 11 and of the DC/DC-stage 12, and the switching states featuring the larger values of two switched voltage waveforms *v*ₚₙ and *v*_{qr} are centered in one switching period to ensure minimum CM and DM voltage-time area over the DC-link CM and DM inductors L_{DC,p} and L_{DC,n}, as shown in **Fig. 9****.**

### (ii.2) Boost-Mode #2 (Vₒᵤₜ > 3V̂ᵢₙ)

Due to the increased *V*ₒᵤₜ, the input voltage of the DC/DC-stage *v*_{qr} is a switched waveform alternately assuming the values of 0V and $\frac{{V}_{out}}{2}$ (*Boost-Mode #2,* see **Fig. 12**). When *Vₒᵤₜ >* 3*V̂ᵢₙ, Vₒᵤₜ* is large enough to balance the DM voltage-time area of the CSR-stage by only using 0V and $\frac{{V}_{out}}{2}$, so *Boost-Mode #2* is applied.

The CM voltage generated by the CSR-stage *v_{CM,CSR}* is a switched waveform alternately assuming the values of two CM voltages of the active states, as shown in **Fig. 14****.** Advantageously, the LF component of *v*_{CM,CSR} is identical to the LF component of *v*_{CM}, which also allows to satisfy the aforementioned requirement for the selected CM filtering method. The DC/DC-stage only produces HF components, i.e. 0V if *v*_{qr} = 0V or Vₒᵤₜ, $\frac{{V}_{out}}{4}$ if T_{DC,hp} and T_{DC,vn} are on, and $- \frac{{V}_{out}}{4}$ if T_{DC,hn} and T_{DC,vp} are on.

(iii) ***Transition-Mode* Operation** ( $\frac{3}{2} {\hat{V}}_{in} < {V}_{out} < \sqrt{3} {\hat{V}}_{in}$)

In *Transition-Mode,* 3/3-PWM and 2/3-PWM are alternately applied based on the local average value of *v*ₚₙ, *v̅ₚₙ.* If *v̅ₚₙ* > *Vₒᵤₜ*, 3/3-PWM is used, and if *v̅ₚₙ* < *Vₒᵤₜ*, 2/3-PWM is used, as shown in **Fig. 15****.**

The DM and CM voltage analysis follows the behaviour described for 2/3-PWM and 3/3-PWM independently.

### Control unit with synergetic control structure

**Fig. 16** shows a block diagram of control unit 20 implementing a synergetic control structure according to an aspect of the present invention. The control unit 20 advantageously comprises three main functional blocks 21, 22 and 23. Control unit 20 can be configured to receive as input a reference output voltage. Outputs of the control unit 20 are gate signals to the switches of the CSR stage 11, representative of a selected PWM scheme and gate signals to the switches of the DC/DC stage 12, which are particularly representative of a duty cycle which the control unit 20 has determined for these switches (in boost mode operation). On the other hand, in buck-mode operation, control unit 20 is configured to maintain DC/DC stage 12 inoperative as described above.

The first block 21 is formed by an *Output Voltage Controller,* and is configured to define the input power reference *P**, e.g. through a Pl-controller, considering the error between the actual and the reference output voltage, *V*ₒᵤₜ and ${V}_{out}^{∗}$, respectively. Hence, by measuring the peak value of the three-phase mains voltages *V̂_{in,meas}* (constant over one mains period even for unbalanced mains conditions), the converter's input conductance reference *G** is calculated as: $G * = \frac{P *}{\frac{3}{2} {\hat{V}}_{in , meas}^{2}}$ (1) and fed into the following block 22 responsible for the *DC-Link Current Reference Generation.*

In order to achieve PFC operation, the three-phase mains current references ${i}_{a}^{*} , {i}_{b}^{*}$*,* and ${i}_{c}^{∗}$ are set proportional to the corresponding three-phase mains voltages ${v}_{m , a}^{∗} , {v}_{m , b}^{∗}$, and ${v}_{m , c}^{*}$, and are limited to *I*ₘₐₓ to ensure the safe operation of the selected power semiconductors and to avoid the saturation of the DC-link inductor *L*_{DC}. The instantaneous values of these currents advantageously provide the sector information for the space vector pulse width modulator 24 of the CSR-stage 11, while the upper envelope of their absolute values ${i}_{DC , 2 / 3}^{∗}$, obtained by ${i}_{DC , 2 / 3}^{∗} = max \left\{\left|{i}_{a}^{∗}\right|, \left|{i}_{b}^{∗}\right|, \left|{i}_{c}^{∗}\right|\right\} ,$ (2) is the varying DC-link current reference for 2/3-PWM operation. Differently, multiplying *G** with the calculated peak value of the three-phase mains voltages *V̂_{in,c}* (different from *V̂_{in,meas}* only in case of unbalanced mains conditions), defined by: ${\hat{V}}_{in , c} = \sqrt{\frac{3}{2} \left({v}_{a}^{2}+{v}_{b}^{2}+{v}_{c}^{2}\right)} ,$ (3) provides the peak value of the three-phase mains current references ${\hat{I}}_{in}^{∗}$. *V̂_{in,c}* is constant and equal to *V̂_{in,meas}* only for symmetric mains conditions. If the mains is unbalanced, *V̂_{in,c}* shows a time-dependent behaviour within one switching period. The varying *V̂_{in,c}* ensures a sinusoidal shape of ${I}_{DC , 3 / 3}^{∗}$ during one-phase operation.

The DC-link current reference for 3/3-PWM operation ${I}_{DC , 3 / 3}^{∗}$, can be determined by the reference output power *P** and measured phase voltages *vₐ, v_{b}, v_{c}.* This ensures the operation under unbalanced mains condition. Dividing ${\hat{I}}_{in}^{∗}$ by the current conversion ratio of the AC/DC-stage ${m}_{AC / DC}^{*}$ and of the DC/DC-stage ${m}_{DC / DC}^{*}$, the DC-link current reference for 3/3-PWM operation ${I}_{DC , 3 / 3}^{∗}$, is calculated. ${m}_{AC / DC}^{*}$ and ${m}_{DC / DC}^{*}$ are derived from the reference output voltage ${V}_{out}^{∗}$ to operate with the minimum DC-link current *i*_{DC}. It will be convenient to note that the current conversion ratio of the AC/DC-stage can alternatively be stated as ${m}_{AC / DC}^{∗} = \frac{{\hat{I}}_{in}^{∗}}{{\hat{I}}_{DC}^{∗}}$ and of the DC/DC-stage as ${m}_{DC / DC}^{∗} = \frac{{\hat{I}}_{DC}^{∗}}{{I}_{out}}$. Therefore, as an advantage and as shown in **Fig. 16****,** the present method advantageously allows to determine ${I}_{DC , 3 / 3}^{∗}$ without requiring to measure the output current *Iₒᵤₜ.* In buck mode operation, the DC-link current reference for 3/3-PWM operation ${I}_{DC , 3 / 3}^{∗}$ corresponds to *Iₒᵤₜ.*

Advantageously, the DC-link current reference ${i}_{DC}^{∗}$ takes the maximum value between ${i}_{DC , 2 / 3}^{∗}$, and ${I}_{DC , 3 / 3}^{∗}$, ${i}_{DC}^{∗} = max \left\{{i}_{DC , 2 / 3}^{∗}, {I}_{DC , 2 / 3}^{∗}\right\} ,$ (4) providing the input for the third block 23, controlling the DC-link current, and referred to as the *Synergetic DC-Link Current Control.* In particular, in one embodiment, automatic selection of the operating mode can be based on the value of ${i}_{DC}^{∗}$, and hence based on comparison between ${i}_{DC , 2 / 3}^{∗}$ and ${I}_{DC , 3 / 3}^{∗}$.

If ${i}_{DC , 2 / 3}^{∗}$ is larger than *I*ₒᵤₜ, hence larger than ${I}_{DC , 3 / 3}^{∗}$, the converter 10 operates in *Boost-mode,* with 2/3-PWM operation of the CSR stage 11. If smaller, the DC/DC-stage 12 does not operate, the switches T_{DC,hp} and T_{DC,hn} are permanently on, and the CSR-stage 11 operates with 3/3-PWM in *Buck-mode,* resulting in identical currents flowing through the DC-link inductor and at the DC output.

Advantageously, the method for determining ${i}_{DC}^{∗}$ shown in (4), ensures a seamless transition from 3/3-PWM to 2/3-PWM and vice versa. It furthermore advantageously ensures minimum conduction losses in *Transition-mode.*

In the *Synergetic DC-Link Current Control* block 23, ${i}_{DC}^{∗}$ is first compared with ${i}_{DC} = \frac{1}{2} \left({i}_{DC , p}+{i}_{DC , n}\right)$; their difference, e.g. by means of the DC-link current Pl-controller, provides the voltage ${v}_{L}^{∗}$ to be generated across *L*_{DC} by switching the CSR-stage 11 and possibly the DC/DC-stage 12. The sum of ${v}_{L}^{∗}$ and the output voltage reference *Vₒᵤₜ* results in the virtual DC-link voltage reference ${V}_{DC}^{∗}$. Feeding ${V}_{DC}^{∗}$ into two voltage limiters, the virtual DC-link voltage references for 3/3-PWM ${v}_{DC , 3 / 3}^{∗}$ and for 2/3-PWM ${v}_{DC , 2 / 3}^{∗}$ are calculated. This is the core of the synergetic operation; in fact, when the three-phase mains voltages are large enough to generate the necessary ${V}_{DC}^{∗}$ without operating the DC/DC-stage, i.e. ${V}_{out}^{∗} < {V}_{max}$, this stage is permanently clamped to eliminate its switching losses, while the CSR-stage provides the required voltage gain (*Buck*-*mode*), but must operate with 3/3-PWM. In this case, ${v}_{DC , 3 / 3}^{∗} = {v}_{DC}^{∗} = {v}_{pn}^{∗}$, i.e. the reference output voltage of the CSR-stage, and ${v}_{DC , 2 / 3}^{∗} = {V}_{out}^{∗}$. Differently, when ${V}_{out}^{∗}$ is large enough to balance the volt-second area applied to *L*_{DC} by the CSR-stage with *m*_{AC/DC} = 1, i.e. ${V}_{out}^{∗} > \frac{2}{\sqrt{3}} {V}_{max}$*,* the CSR-stage operates with 2/3-PWM and the DC/DC-stage is actively switched with PWM (*Boost*-*mode*). Specifically, ${v}_{DC , 3 / 3}^{∗} = {V}_{max}$*,* and ${v}_{DC , 2 / 3}^{∗} = {v}_{qr}^{∗}$*,* i.e. the reference input voltage of the DC/DC-stage. Finally, when ${V}_{max} < {V}_{out}^{∗} < \frac{2}{\sqrt{3}} {V}_{max}$*,* the current controller democratically switches between 2/3-PWM and 3/3-PWM, depending on the instantaneous ${v}_{L}^{∗}$ (*Transition-mode*).

Accordingly, the current control block 23 advantageously regulates the DC-link current *i*_{DC} always by means of only one stage, i.e. when operating with 3/3-PWM, the CSR-stage 11 is controlled by modifying ${v}_{DC , 3 / 3}^{∗}$ and ${v}_{DC , 2 / 3}^{∗}$ is not influenced thanks to the voltage limiter; when operating with 2/3-PWM, instead, the DC/DC-stage 11 is controlled by modifying ${v}_{DC , 2 / 3}^{∗}$ and ${v}_{DC , 3 / 3}^{∗}$ is clamped to *V*ₘₐₓ.

To ultimately operate the two stages, ${v}_{DC , 3 / 3}^{∗}$ and ${v}_{DC , 2 / 3}^{∗}$ are fed to the modulators 24, 25. For the CSR-stage, the reference DC-link current ${i}_{DC , CSR}^{∗}$ utilized in the modulator 24 is determined based on ${v}_{DC , 3 / 3}^{∗}$ and on *m*_{DC/DC}. ${i}_{DC , CSR}^{∗}$ and ${i}_{DC}^{∗}$ are identical in steady state. Specifically, in 3/3-PWM operation, *Vₒᵤₜ* coincides with ${v}_{qn}^{∗} = {v}_{DC , 3 / 3}^{∗}$ and ${m}_{DC / DC}^{*} = 1$ because T_{DC,hp} and T_{DC,hn} are permanently on. Differently, in 2/3-PWM operation, ${m}_{DC / DC}^{*}$ must be considered due to the operation of the DC/DC stage. Given $\frac{{V}_{out}^{∗}}{{m}_{DC / DC}^{∗} . {V}_{max}} = 1$ the CSR-stage operates with the maximum modulation index, and ${i}_{DC}^{∗}$ is regulated by the DC/DC-stage only. The switching signals for the CSR-stage 11 can be calculated from ${i}_{a}^{∗} , {i}_{b}^{∗} , {i}_{c}^{∗}$*,* and ${i}_{DC , CSR}^{∗}$ as described in reference [4] and appropriately distributed to the twelve gate terminals.

An example is given in the following considering the sector where phase c has the minimum current value (see **Fig. 7**). The zero state used in this sector is [bb] from $\frac{π}{6}$ to $\frac{π}{3}$ and [aa] from $\frac{π}{3}$ to $\frac{π}{2}$, instead of [cc] as in the PWM schemes described in the prior art. The duty cycles of the two active states and of the zero state are calculated as: ${δ}_{\left[ac\right]} = \frac{{i}_{a}^{∗}}{{i}_{DC}^{∗}} , {δ}_{\left[bc\right]} = \frac{{i}_{b}^{∗}}{{i}_{DC}^{∗}} , and {δ}_{\left[0\right]} = 1 - {δ}_{\left[ac\right]} - {δ}_{\left[bc\right]} ,$ where *δ*_{[*xy*]} indicates the duty cycle of the state [xy].

Finally, the duty-cycle reference of the DC/DC-stage 12 is calculated by: $d * = \frac{{v}_{DC , 2 / 3}^{∗}}{{V}_{out}^{∗}} = \frac{{v}_{qn}^{∗}}{{V}_{out}^{∗}}$

Referring to FIG. 19, a battery charging system 700 comprises a power supply unit 704. The power supply unit 704 is coupled on one side to the AC grid through terminals A, B, C, and on the other side (at terminals P', N') to an interface 702, e.g. comprising a switch device, which allows to connect the power supply unit 704 to a battery 703. The power supply unit 704 comprises any one of the electrical converter 10 as described hereinabove with first and second converter stages and further can comprise a third converter stage 701, which in the present system is a DC-DC converter, e.g. an LLC resonant converter. The power supply unit 704, e.g. the third converter stage 701, can comprise a pair of coils which are inductively coupled through air (not shown), such as in the case of wireless power transfer. Alternatively, the DC-DC converter stage 701 can comprise or consist of an isolated DC-DC converter. In some cases, the interface 702 can comprise a plug and socket, e.g. in wired power transfer. Alternatively, the plug and socket can be provided at the input (e.g., at nodes A, B, C).

Referring to Fig. 20, an electric motor drive system 30 can incorporate the electrical converter as described herein. In an advantageous embodiment, the stator coils 33 of an electric motor (not shown) are connected to act as a common mode filter choke and/or as a differential mode inductor of the DC link 13. Additionally, or alternatively, the second converter stage 12 can be configured to operate as a traction inverter of the electric motor. The traction inverter can be formed by the half bridge 320 between nodes q and r. Switches 321, 322, 323, 324 can be semiconductor switches, e.g. just as switches T_{DC,vp} , T_{DC,hp} , T_{DC,vn} and T_{DC,hn} respectively of Fig. 1.

## Claims

1. Electrical converter (10) for converting between an AC signal having at least three phases and a DC signal, comprising:
at least three phase terminals (A, B, C), a first DC terminal (P) and a second DC terminal (N),
a first converter stage (11) operably coupled to the at least three phase terminals and comprising a first intermediate node (p) and a second intermediate node (n), wherein the first converter stage (11) is operable to convert between an AC current at the at least three phase terminals and a first DC current (i_{DC,p}, i_{DC,n}) at the first and second intermediate nodes (p, n),
a second converter stage (12) operably coupled to the first DC terminal (P) and the second DC terminal (N) and comprising a third intermediate node (q), a fourth intermediate node (r) and a middle voltage node (m) between the first and second DC terminals, wherein the second converter stage is operable to convert between a first DC signal, particularly the first DC current, at the third and fourth intermediate nodes (q, r) and a second DC signal at the first and second DC terminals, particularly a DC voltage (Vₒᵤₜ) across the first and second DC terminals, wherein the second converter stage comprises a boost circuit (121, 122, 123, 124) comprising a plurality of first switches (T_{DC,vp}, T_{DC,vn}) series connected between the third intermediate node (q) and the fourth intermediate node (r), wherein a midpoint (s) of the series connected first switches is connected to the middle voltage node (m) so as to be at a same electrical potential as the middle voltage node,
a first filter stage (15) comprising a capacitor network (Cᵢₙ) operably coupled to each of the three phase terminals, wherein the capacitor network comprises a star-point (k),
a DC link (13) connecting the first intermediate node (p) to the third intermediate node (q) and the second intermediate node (n) to the fourth intermediate node (r), wherein the DC link comprises a common mode filter,
a control unit (20), wherein the first converter stage (11) and the second converter stage (12) comprise active switching devices operably coupled to the control unit, wherein the control unit is implemented with a plurality of operating modes for operating the electrical converter,
**characterised in that**:
a first operating mode of the plurality of operating modes corresponds to a rectifier buck-mode of operation in which the second converter stage is configured to operate to continuously connect the third and fourth intermediate nodes (q, r) to the first and second DC terminals respectively, and wherein the control unit (20) is configured to operate the active switching devices (T_{a,h}, T_{a,l}, T_{b,h}, T_{b,l}, T_{c,h}, T_{c,l}) of the first converter stage (11) through a three-third pulse-width modulation in which the active switching devices of the first converter stage are switched between two respective active states, wherein two phases of the at least three phases are connected to the first and second intermediate nodes (p, n), and a zero state, wherein in the zero state the first and the second intermediate nodes are short circuited by the active switches of the first converter stage,
a second operating mode of the plurality of operating modes corresponds to a rectifier boost mode of operation in which the control unit (20) is configured to operate the active switching devices (T_{a,h}, T_{a,l}, T_{b,h}, T_{b,l}, T_{c,h}, T_{c,l}, T_{DC,hp}, T_{DC,vp}, T_{DC,hn}, T_{DC,vn}) of both the first converter stage (11) and the second converter stage (12) through pulse width modulation, wherein in the second operating mode, the control unit (20) is configured to operate the active switching devices of the first converter stage (11) according to a two-third pulse-width modulation scheme being free of zero states
the control unit (20) is operable to determine a first current reference ( ${i}_{DC , 2 / 3}^{∗}$) for a current in the DC link representative of two-third pulse-width modulation and a second current reference ( ${I}_{DC , 3 / 3}^{∗}$) for the current in the DC link representative of three-third pulse-width modulation,
the control unit is operable to automatically select between the first operating mode and the second operating mode based on comparison of the first current reference and the second current reference, and
**in that** the common mode filter comprises a common mode capacitor (C_{CM} ) connecting the middle voltage node (m) to the star-point (k).

2. Electrical converter of claim 1, wherein the common mode filter comprises a common mode filter choke (L_{DC,CM}) operably coupled to the first intermediate node (p) and the second intermediate node (n), the third intermediate node (q) and the fourth intermediate node (r).

3. Electrical converter of claim 1 or 2, wherein the DC link comprises at least one differential mode inductor (L_{DC,DM}) operably coupled to the first intermediate node (p) and the third intermediate node (q) and/or operably coupled to the second intermediate node (n) and the fourth intermediate node (r).

4. Electrical converter of claims 2 and 3, wherein the common mode filter choke (L_{DC,CM}) and the differential mode inductor (L_{DC,DM}) comprise a common core or individual cores.

5. Electrical converter of any one of the preceding claims, wherein the first filter stage (15) comprises inductors (Lₘ) coupled between the three phase terminals (A, B, C) and the capacitor network (Cᵢₙ).

6. Electrical converter of any one of the preceding claims, wherein the second converter stage (12) comprises a plurality of output capacitors (C_{out,p}, C_{out,n}) series connected across the first and second DC terminals, wherein the middle voltage node (m) is a middle node of the plurality of output capacitors.

7. Electrical converter of any one of the preceding claims, wherein the boost circuit comprises a first boost circuit (121, 123) and a second boost circuit (122, 124) stacked between the first DC terminal (P) and the second DC terminal (N), wherein the middle voltage node (m) is a common node of the first and second boost circuits, preferably wherein the first boost circuit and/or the second boost circuit is a multi-level boost circuit.

8. Electrical converter of any one of the preceding claims, comprising a third DC terminal (125) connected to the middle voltage node (m).

9. Electrical converter of any one of the preceding claims, wherein in the first operating mode, the control unit is configured to operate the active switching devices of the first converter stage (11) according to a pulse-width modulation scheme switching between active states in which two phases of the at least three phases are connected to the first and second intermediate nodes (p, n) and zero states in which the first and second intermediate nodes (p, n) are short-circuited, wherein the control unit is configured to implement the zero states by connecting a phase of the at least three phases of the AC signal having a smallest absolute instantaneous voltage value to the first and second intermediate nodes (p, n).

10. Electrical converter of any one of the preceding claims, wherein the first current reference is determined based on a reference output power and reference input phase currents and wherein the second current reference is determined based on a reference output power and measured phase voltages.

11. Electrical converter of any one of the preceding claims, wherein the control unit (20) is configured to operate the first converter stage (11) and the second converter stage (12) so as to obtain a voltage across the common mode capacitor (C_{CM}) being one of: a substantially constant zero voltage signal, a substantially triangular waveform and a substantially sinusoidal waveform, preferably comprising one or more harmonic frequencies of a fundamental frequency of the AC signal, preferably comprising a third harmonic frequency of the fundamental frequency.

12. Electrical converter of any one of the preceding claims, wherein the control unit (20) is operable to inject a common mode voltage signal to the third and fourth intermediate nodes (q, r) so as to control a voltage across the common mode capacitor (C_{CM} ), preferably comprising measurement means for measuring a voltage signal at the middle voltage node (m) and at nodes (a, b, c) of the at least three phases, wherein the controller is operable to determine the common mode voltage signal injected to the third and fourth intermediate nodes (q, r) based on the measured voltage signals, preferably wherein the control unit is operable to add an offset to duty cycles of pulse width modulation signals controlling operation of active switches (T_{DC,vp}, T_{DC,vn}) of the second converter stage, thereby obtaining the common mode voltage signal injected to the third and fourth intermediate nodes (q, r).

13. Electric motor drive system (30), comprising the electrical converter of any one of the preceding claims, preferably further comprising an electric motor comprising stator coils, wherein the stator coils are connected to act as a common mode filter choke and/or as a differential mode inductor of the DC link of the electrical converter, preferably comprising a traction inverter operable to drive the electric motor, wherein the traction inverter is configured to operate as the second converter stage when operating the electrical converter.

14. Battery charging system, in particular for charging electric vehicle drive batteries, wherein the battery charging system comprises a power supply, the power supply comprising the electrical converter of any one of the claims 1 to 12.

15. Method of converting between an AC signal having at least three phases at at least three phase nodes (a, b, c) and a DC signal at a high node (p) and a low node (n), comprising providing the electrical converter of any one of the claims 1 to 12, and switching by pulse width modulation between the at least three phase nodes (a, b, c) and the high node (p) and the low node (n) to obtain a switched voltage signal across the high node and low node, wherein a period of the switched voltage signal comprises a zero voltage level portion obtained by connecting the phase node having a smallest absolute instantaneous voltage value of the at least three phases of the AC signal to both the high node (p) and the low node (n), preferably wherein the switched voltage signal comprises a second voltage level portion obtained by connecting the phase node having the highest instantaneous voltage value of the at least three phases of the AC signal to the high node (p), and connecting the phase node having the lowest instantaneous voltage value of the at least three phases of the AC signal to the low node (n), preferably wherein the switched voltage signal comprises a third voltage level portion obtained by connecting the phase node having the smallest absolute instantaneous voltage value to the high node, and connecting the phase node having the lowest instantaneous voltage value of the at least three phases of the AC signal to the low node, or vice versa.

## Patentansprüche

1. Elektrischer Wandler (10) zum Umwandeln zwischen einem Wechselstromsignal, das mindestens drei Phasen aufweist, und einem Gleichstromsignal, umfassend:
mindestens drei Phasenanschlüsse (A, B, C), einen ersten Gleichstromanschluss (P) und einen zweiten Gleichstromanschluss (N),
eine erste Wandlerstufe (11), die an die mindestens drei Phasenanschlüsse betriebsfähig gekoppelt ist, und umfassend einen ersten Zwischenknoten (p) und einen zweiten Zwischenknoten (n), wobei die erste Wandlerstufe (11) betriebsfähig ist, um zwischen einem Wechselstrom an den mindestens drei Phasenanschlüssen und einem ersten Gleichstrom (i_{DC,p,} i_{DC,n}) an dem ersten und dem zweiten Zwischenknoten (p, n) umzuwandeln,
eine zweite Wandlerstufe (12), die an den ersten Gleichstromanschluss (P) und den zweiten Gleichstromanschluss (N) betriebsfähig gekoppelt ist, und umfassend einen dritten Zwischenknoten (q), einen vierten Zwischenknoten (r) und einen Mittelspannungsknoten (m) zwischen dem ersten und dem zweiten Gleichstromanschluss, wobei die zweite Wandlerstufe betriebsfähig ist, um zwischen einem ersten Gleichstromsignal, insbesondere dem ersten Gleichstrom, an dem dritten und dem vierten Zwischenknoten (q, r) und einem zweiten Gleichstromsignal an dem ersten und dem zweiten Gleichstromanschluss, insbesondere einer Gleichspannung (Vₒᵤₜ) über den ersten und den zweiten Gleichspannungsanschluss, umzuwandeln, wobei die zweite Wandlerstufe eine Aufwärtsschaltung (121, 122, 123, 124) umfasst, umfassend eine Vielzahl von ersten Schaltern (T_{DC},ᵥₚ, T_{Dc},ᵥₙ), die zwischen dem dritten Zwischenknoten (q) und dem vierten Zwischenknoten (r) in Reihe geschaltet sind, wobei ein Mittelpunkt (s) der in Reihe geschalteten ersten Schalter mit dem Mittelspannungsknoten (m) verbunden ist, um auf einem gleichen elektrischen Potenzial wie der Mittelspannungsknoten zu sein,
eine erste Filterstufe (15), umfassend ein Kondensatornetzwerk (Cᵢₙ), das an jeden der drei Phasenanschlüsse betriebsfähig gekoppelt ist, wobei das Kondensatornetzwerk einen Sternpunkt (k) umfasst,
einen Gleichstromzwischenkreis (13), der den ersten Zwischenknoten (p) an den dritten Zwischenknoten (q) und den zweiten Zwischenknoten (n) an den vierten Zwischenknoten (r) anschließt, wobei der Gleichstromzwischenkreis einen Gleichtaktfilter umfasst,
eine Steuereinheit (20), wobei die erste Wandlerstufe (11) und die zweite Wandlerstufe (12) aktive Schaltvorrichtungen umfassen, die an die Steuereinheit betriebsfähig gekoppelt sind, wobei die Steuereinheit mit einer Vielzahl von Betriebsmodi zum Betreiben des elektrischen Wandlers implementiert ist,
**dadurch gekennzeichnet, dass**:
ein erster Betriebsmodus der Vielzahl von Betriebsmodi einem Gleichrichter-Tiefsetzbetriebsmodus entspricht, in dem die zweite Wandlerstufe konfiguriert ist, um betrieben zu werden, um den dritten und den vierten Zwischenknoten (q, r) an den ersten beziehungsweise den zweiten Gleichstromanschluss kontinuierlich anzuschließen, und wobei die Steuereinheit (20) konfiguriert ist, um die aktiven Schaltvorrichtungen (Tₐ,ₕ, Tₐ,_{I}, T_{b},_{h,} T_{b,I}, T_{c},ₕ, T_{c},_{I}) der ersten Wandlerstufe (11) durch eine Dreidrittel-Pulsweitenmodulation zu betreiben, in der die aktiven Schaltvorrichtungen der ersten Wandlerstufe zwischen zwei jeweiligen aktiven Zuständen, wobei zwei Phasen der mindestens drei Phasen an den ersten und den zweiten Zwischenknoten (p, n) angeschlossen sind, und einem Nullzustand umgeschaltet werden, wobei in dem Nullzustand der erste und der zweite Zwischenknoten durch die aktiven Schalter der ersten Wandlerstufe kurzgeschlossen sind,
ein zweiter Betriebsmodus der Vielzahl von Betriebsmodi einem Gleichrichter-Aufwärtsbetriebsmodus entspricht, in dem die Steuereinheit (20) konfiguriert ist, um die aktiven Schaltvorrichtungen (Tₐ,ₕ, Tₐ,_{I}, T_{b},ₕ, T_{b},_{I}, T_{c},ₕ, T_{c},_{I}, T_{DC},_{hp,}T_{DC},_{VP},T_{DC},ₕₙ, T_{DC,vn}) sowohl der ersten Wandlerstufe (11) als auch der zweiten Wandlerstufe (12) durch Pulsweitenmodulation zu betreiben, wobei in dem zweiten Betriebsmodus die Steuereinheit (20) konfiguriert ist, um die aktiven Schaltvorrichtungen der ersten Wandlerstufe (11) gemäß einem Zweidrittel-Pulsweitenmodulationsschema zu betreiben, das frei von Nullzuständen ist,
die Steuereinheit (20) betriebsfähig ist, um eine erste Stromreferenz ( ${i}_{DC , 2 / 3}^{*}$) für einen Strom in dem Gleichstromzwischenkreis, repräsentativ für eine Zweidrittel-Pulsweitenmodulation, und eine zweite Stromreferenz ( ${i}_{DC , 3 / 3}^{∗}$) für den Strom in dem Gleichstromzwischenkreis, repräsentativ für eine Dreidrittel-Pulsweitenmodulation, zu bestimmen,
die Steuereinheit betriebsfähig ist, um zwischen dem ersten Betriebsmodus und dem zweiten Betriebsmodus basierend auf einem Vergleich der ersten Stromreferenz und der zweiten Stromreferenz automatisch auszuwählen, und
dadurch, dass der Gleichtaktfilter einen Gleichtaktkondensator (C_{CM}), der den Mittelspannungsknoten (m) an den Sternpunkt (k) anschließt, umfasst.

2. Elektrischer Wandler nach Anspruch 1, wobei der Gleichtaktfilter eine Gleichtaktfilterdrossel (L_{DC},_{CM}) umfasst, die an den ersten Zwischenknoten (p) und den zweiten Zwischenknoten (n), den dritten Zwischenknoten (q) und den vierten Zwischenknoten (r) betriebsfähig gekoppelt ist.

3. Elektrischer Wandler nach Anspruch 1 oder 2, wobei der Gleichstromzwischenkreis mindestens einen Differenzialmodusinduktor (L_{DC},_{DM}), der an den ersten Zwischenknoten (p) und den dritten Zwischenknoten (q) betriebsfähig gekoppelt ist und/oder an den zweiten Zwischenknoten (n) und den vierten Zwischenknoten (r) betriebsfähig gekoppelt ist, umfasst.

4. Elektrischer Wandler nach den Ansprüchen 2 und 3, wobei die Gleichtaktfilterdrossel (L_{DC},_{CM}) und der Differenzialmodusinduktor (L_{DC},_{DM}) einen gemeinsamen Kern oder einzelne Kerne umfassen.

5. Elektrischer Wandler nach einem der vorstehenden Ansprüche, wobei die erste Filterstufe (15) Induktoren (Lₘ), die zwischen den drei Phasenanschlüssen (A, B, C) und dem Kondensatornetzwerk (Cᵢₙ) gekoppelt sind, umfasst.

6. Elektrischer Wandler nach einem der vorstehenden Ansprüche, wobei die zweite Wandlerstufe (12) eine Vielzahl von Ausgangskondensatoren (C_{out.p}, C_{out.n}) umfasst, die über den ersten und den zweiten Gleichstromanschluss in Reihe geschaltet sind, wobei der Mittelspannungsknoten (m) ein Mittelknoten der Vielzahl von Ausgangskondensatoren ist.

7. Elektrischer Wandler nach einem der vorstehenden Ansprüche, wobei die Aufwärtsschaltung eine erste Aufwärtsschaltung (121, 123) und eine zweite Aufwärtsschaltung (122, 124) umfasst, die zwischen dem ersten Gleichstromanschluss (P) und dem zweiten Gleichstromanschluss (N) gestapelt sind, wobei der Mittelspannungsknoten (m) ein gemeinsamer Knoten der ersten und der zweiten Aufwärtsschaltung ist, vorzugsweise wobei die erste Aufwärtsschaltung und/oder die zweite Aufwärtsschaltung eine Mehrstufen-Aufwärtsschaltung ist.

8. Elektrischer Wandler nach einem der vorstehenden Ansprüche, umfassend einen dritten Gleichstromanschluss (125), der an den Mittelspannungsknoten (m) angeschlossen ist.

9. Elektrischer Wandler nach einem der vorstehenden Ansprüche, wobei in dem ersten Betriebsmodus die Steuereinheit konfiguriert ist, um die aktiven Schaltvorrichtungen der ersten Wandlerstufe (11) gemäß einem Pulsweitenmodulationsschema zu betreiben, das zwischen aktiven Zuständen, in denen zwei Phasen der mindestens drei Phasen an den ersten und den zweiten Zwischenknoten (p, n) angeschlossen sind, und Nullzuständen, in denen die ersten und zweiten Zwischenknoten (p, n) kurzgeschlossen sind, umschaltet, wobei die Steuereinheit konfiguriert ist, um die Nullzustände durch Anschließen einer Phase der mindestens drei Phasen des Wechselstromsignals, die einen kleinsten absoluten momentanen Spannungswert aufweist, an den ersten und den zweiten Zwischenknoten (p, n) zu implementieren.

10. Elektrischer Wandler nach einem der vorstehenden Ansprüche, wobei die erste Stromreferenz basierend auf einer Referenzausgangsleistung und Referenzeingangsphasenströmen bestimmt wird und wobei die zweite Stromreferenz basierend auf einer Referenzausgangsleistung und gemessenen Phasenspannungen bestimmt wird.

11. Elektrischer Wandler nach einem der vorstehenden Ansprüche, wobei die Steuereinheit (20) konfiguriert ist, um die erste Wandlerstufe (11) und die zweite Wandlerstufe (12) zu betreiben, um eine Spannung über den Gleichtaktkondensator (C_{CM}) zu erhalten, die eines ist von: einem im Wesentlichen konstanten Nullspannungssignal, einer im Wesentlichen dreieckigen Wellenform und einer im Wesentlichen sinusförmigen Wellenform, vorzugsweise umfassend eine oder mehrere harmonische Frequenzen einer Grundfrequenz des Wechselstromsignals, vorzugsweise umfassend eine dritte harmonische Frequenz der Grundfrequenz.

12. Elektrischer Wandler nach einem der vorstehenden Ansprüche, wobei die Steuereinheit (20) betriebsfähig ist, um ein Gleichtaktspannungssignal in den dritten und den vierten Zwischenknoten (q, r) einzuspeisen, um eine Spannung über den Gleichtaktkondensator (C_{CM}) zu steuern, vorzugsweise umfassend Messmittel zum Messen eines Spannungssignals an dem Mittelspannungsknoten (m) und an Knoten (a, b, c) der mindestens drei Phasen, wobei die Steuerung betriebsfähig ist, um das Gleichtaktspannungssignal, das in den dritten und den vierten Zwischenknoten (q, r) eingespeist wird, basierend auf den gemessenen Spannungssignalen zu bestimmen, vorzugsweise wobei die Steuereinheit betriebsfähig ist, um einen Offset zu Tastverhältnissen von Pulsweitenmodulationssignalen hinzuzufügen, die den Betrieb von aktiven Schaltern (T_{DC},ᵥₚ, T_{DC},ᵥₙ) der zweiten Wandlerstufe steuern, wodurch das Gleichtaktspannungssignal, das in den dritten und den vierten Zwischenknoten (q, r) eingespeist wird, erhalten wird.

13. Elektromotorantriebssystem (30), umfassend den elektrischen Wandler nach einem der vorstehenden Ansprüche, vorzugsweise ferner umfassend einen Elektromotor, umfassend Statorspulen, wobei die Statorspulen angeschlossen sind, um als Gleichtaktfilterdrossel und/oder als Differenzialmodusinduktor des Gleichstromzwischenkreises des elektrischen Wandlers zu wirken, vorzugsweise umfassend einen Traktionsumrichter, der betriebsfähig ist, um den Elektromotor anzutreiben, wobei der Traktionsumrichter konfiguriert ist, um bei dem Betreiben des elektrischen Wandlers als die zweite Wandlerstufe betrieben zu werden.

14. Batterieladesystem, insbesondere zum Laden von Elektrofahrzeugantriebsbatterien, wobei das Batterieladesystem eine Leistungsversorgung umfasst, die Leistungsversorgung umfassend den elektrischen Wandler nach einem der Ansprüche 1 bis 12.

15. Verfahren zum Umwandeln zwischen einem Wechselstromsignal, das mindestens drei Phasen an mindestens drei Phasenknoten (a, b, c) aufweist, und einem Gleichstromsignal an einem hohen Knoten (p) und einem niedrigen Knoten (n), umfassend ein Bereitstellen des elektrischen Wandlers nach einem der Ansprüche 1 bis 12 und das Umschalten durch Pulsweitenmodulation zwischen den mindestens drei Phasenknoten (a, b, c) und dem hohen Knoten (p) und dem niedrigen Knoten (n), um ein umgeschaltetes Spannungssignal über den hohen Knoten und den niedrigen Knoten zu erhalten, wobei eine Periode des umgeschalteten Spannungssignals einen Nullspannungspegelabschnitt umfasst, der durch Anschließen des Phasenknotens, der einen kleinsten absoluten momentanen Spannungswert der mindestens drei Phasen des Wechselstromsignals aufweist, sowohl an den hohen Knoten (p) als auch an den niedrigen Knoten (n), erhalten wird, vorzugsweise wobei das umgeschaltete Spannungssignal einen zweiten Spannungspegelabschnitt umfasst, der durch Anschließen des Phasenknotens, der den höchsten momentanen Spannungswert der mindestens drei Phasen des Wechselstromsignals aufweist, an den hohen Knoten (p), und Anschließen des Phasenknotens, der den niedrigsten momentanen Spannungswert der mindestens drei Phasen Wechselstromsignals aufweist, an den niedrigen Knoten (n), erhalten wird, vorzugsweise wobei das umgeschaltete Spannungssignal einen dritten Spannungspegelabschnitt umfasst, der durch Anschließen des Phasenknotens, der den kleinsten absoluten momentanen Spannungswert aufweist, an den hohen Knoten, und Anschließen des Phasenknotens, der den niedrigsten momentanen Spannungswert der mindestens drei Phasen des Wechselstromsignals aufweist, an den niedrigen Knoten, oder umgekehrt, erhalten wird.

## Revendications

1. Convertisseur électrique (10) permettant une conversion entre un signal CA ayant au moins trois phases et un signal CC, comprenant :
au moins trois bornes de phase (A, B, C), une première borne CC (P) et une deuxième borne CC (N),
un premier étage de convertisseur (11) couplé de manière opérationnelle aux au moins trois bornes de phase et comprenant un premier nœud intermédiaire (p) et un deuxième nœud intermédiaire (n), dans lequel le premier étage de convertisseur (11) permet d'effectuer une conversion entre un courant CA au niveau des au moins trois bornes de phase et un premier courant CC (i_{DC,p}, i_{DC,n}) au niveau des premier et deuxième nœuds intermédiaires (p, n),
un second étage de convertisseur (12) couplé de manière opérationnelle à la première borne CC (P) et à la deuxième borne CC (N) et comprenant un troisième nœud intermédiaire (q), un quatrième nœud intermédiaire (r) et un nœud de tension moyenne (m) entre les première et deuxième bornes CC, dans lequel le second étage de convertisseur permet d'effectuer une conversion entre un premier signal CC, en particulier le premier courant CC, au niveau des troisième et quatrième nœuds intermédiaires (q, r) et un second signal CC au niveau des première et deuxième bornes CC, en particulier une tension CC (Vₒᵤₜ) aux bornes des première et deuxième bornes CC, dans lequel le second étage de convertisseur comprend un circuit élévateur (121, 122, 123, 124) comprenant une pluralité de premiers commutateurs (T_{DC,vp}, T_{DC,vn}) connectés en série entre le troisième nœud intermédiaire (q) et le quatrième nœud intermédiaire (r), dans lequel un point médian (s) des premiers commutateurs connectés en série est connecté au nœud de tension moyenne (m) de manière à être à un même potentiel électrique que le nœud de tension moyenne,
un premier étage de filtre (15) comprenant un réseau de condensateurs (Cᵢₙ) couplé de manière opérationnelle à chacune des trois bornes de phase, dans lequel le réseau de condensateurs comprend un point étoile (k),
une liaison CC (13) connectant le premier nœud intermédiaire (p) au troisième nœud intermédiaire (q) et le deuxième nœud intermédiaire (n) au quatrième nœud intermédiaire (r), dans lequel la liaison CC comprend un filtre de mode commun,
une unité de commande (20), dans lequel le premier étage de convertisseur (11) et le second étage de convertisseur (12) comprennent des dispositifs de commutation actifs couplés de manière opérationnelle à l'unité de commande, dans lequel l'unité de commande est mise en œuvre avec une pluralité de modes de fonctionnement permettant de faire fonctionner le convertisseur électrique,
**caractérisé en ce que** :
un premier mode de fonctionnement de la pluralité de modes de fonctionnement correspond à un mode de fonctionnement abaisseur redresseur dans lequel le second étage de convertisseur est configuré pour fonctionner pour connecter en continu les troisième et quatrième nœuds intermédiaires (q, r) aux première et deuxième bornes CC respectivement, et dans lequel l'unité de commande (20) est configurée pour faire fonctionner les dispositifs de commutation actifs (T_{a,h}, T_{a,I}, T_{b,h,} T_{b,I}, T_{c,h}, T_{c,I}) du premier étage de convertisseur (11) par une modulation de largeur d'impulsion à trois tiers dans laquelle les dispositifs de commutation actifs du premier étage de convertisseur sont commutés entre deux états actifs respectifs, dans lequel deux phases des au moins trois phases sont connectées aux premier et deuxième nœuds intermédiaires (p, n), et un état nul, dans lequel, dans l'état nul, les premier et deuxième nœuds intermédiaires sont court-circuités par les commutateurs actifs du premier étage de convertisseur,
un deuxième mode de fonctionnement de la pluralité de modes de fonctionnement correspond à un mode de fonctionnement redresseur élévateur dans lequel l'unité de commande (20) est configurée pour faire fonctionner les dispositifs de commutation actifs (T_{a,h}, T_{a,I}, T_{b,h}, T_{b,I}, T_{c,h}, T_{c,I}, T_{DC,hp,}T_{DC,VP},T_{DC,hn}, T_{DC,vn}) à la fois du premier étage de convertisseur (11) et du second étage de convertisseur (12) par modulation de largeur d'impulsion, dans lequel, dans le deuxième mode de fonctionnement, l'unité de commande (20) est configurée pour faire fonctionner les dispositifs de commutation actifs du premier étage de convertisseur (11) selon un schéma de modulation de largeur d'impulsion aux deux tiers exempt d'états nuls,
l'unité de commande (20) permet de déterminer une première référence de courant ( ${i}_{DC , 2 / 3}^{*}$) pour un courant dans la liaison CC représentative d'une modulation de largeur d'impulsion à deux tiers et une seconde référence de courant ( ${I}_{DC , 3 / 3}^{*}$) pour le courant dans la liaison CC représentative d'une modulation de largeur d'impulsion à trois tiers,
l'unité de commande permet de sélectionner automatiquement entre le premier mode de fonctionnement et le second mode de fonctionnement sur la base de la comparaison de la première référence de courant et de la seconde référence de courant, et
**en ce que** le filtre de mode commun comprend un condensateur de mode commun (C_{CM}) connectant le nœud de tension moyenne (m) au point étoile (k).

2. Convertisseur électrique selon la revendication 1, dans lequel le filtre de mode commun comprend une bobine d'arrêt de filtre de mode commun (L_{DC,CM}) couplée de manière opérationnelle au premier nœud intermédiaire (p) et au deuxième nœud intermédiaire (n), au troisième nœud intermédiaire (q) et au quatrième nœud intermédiaire (r).

3. Convertisseur électrique selon la revendication 1 ou 2, dans lequel la liaison CC comprend au moins une inductance de mode différentiel (L_{DC,DM}) couplée de manière opérationnelle au premier nœud intermédiaire (p) et au troisième nœud intermédiaire (q) et/ou couplée de manière opérationnelle au deuxième nœud intermédiaire (n) et au quatrième nœud intermédiaire (r).

4. Convertisseur électrique selon les revendications 2 et 3, dans lequel la bobine d'arrêt de filtre de mode commun (L_{DC,CM}) et l'inductance de mode différentiel (L_{DC,DM}) comprennent un noyau commun ou des noyaux individuels.

5. Convertisseur électrique selon l'une quelconque des revendications précédentes, dans lequel le premier étage de filtre (15) comprend des inductances (Lₘ) couplées entre les trois bornes de phase (A, B, C) et le réseau de condensateurs (Cᵢₙ).

6. Convertisseur électrique selon l'une quelconque des revendications précédentes, dans lequel le second étage de convertisseur (12) comprend une pluralité de condensateurs de sortie (C_{out,p}, C_{out,n}) connectés en série aux bornes des première et deuxième bornes CC, dans lequel le nœud de tension moyenne (m) est un nœud médian de la pluralité de condensateurs de sortie.

7. Convertisseur électrique selon l'une quelconque des revendications précédentes, dans lequel le circuit élévateur comprend un premier circuit élévateur (121, 123) et un second circuit élévateur (122, 124) empilés entre la première borne CC (P) et la deuxième borne CC (N), dans lequel le nœud de tension moyenne (m) est un nœud commun des premier et second circuits élévateurs, de préférence dans lequel le premier circuit élévateur et/ou le second circuit élévateur est un circuit élévateur multiniveau.

8. Convertisseur électrique selon l'une quelconque des revendications précédentes, comprenant une troisième borne CC (125) connectée au nœud de tension moyenne (m).

9. Convertisseur électrique selon l'une quelconque des revendications précédentes, dans lequel, dans le premier mode de fonctionnement, l'unité de commande est configurée pour actionner les dispositifs de commutation actifs du premier étage de convertisseur (11) selon un schéma de modulation de largeur d'impulsion commutant entre des états actifs dans lesquels deux phases des au moins trois phases sont connectées aux premier et deuxième nœuds intermédiaires (p, n) et des états nuls dans lesquels les premier et deuxième nœuds intermédiaires (p, n) sont court-circuités, dans lequel l'unité de commande est configurée pour mettre en œuvre les états nuls en connectant une phase des au moins trois phases du signal CA ayant la plus petite valeur de tension instantanée absolue aux premier et deuxième nœuds intermédiaires (p, n).

10. Convertisseur électrique selon l'une quelconque des revendications précédentes, dans lequel la première référence de courant est déterminée sur la base d'une puissance de sortie de référence et de courants de phase d'entrée de référence et dans lequel la seconde référence de courant est déterminée sur la base d'une puissance de sortie de référence et de tensions de phase mesurées.

11. Convertisseur électrique selon l'une quelconque des revendications précédentes, dans lequel l'unité de commande (20) est configurée pour faire fonctionner le premier étage de convertisseur (11) et le second étage de convertisseur (12) de manière à obtenir une tension aux bornes du condensateur de mode commun (C_{CM}) étant l'un parmi : un signal de tension nulle sensiblement constant, une forme d'onde sensiblement triangulaire et une forme d'onde sensiblement sinusoïdale, comprenant de préférence une ou plusieurs fréquences harmoniques d'une fréquence fondamentale du signal CA, comprenant de préférence une troisième fréquence harmonique de la fréquence fondamentale.

12. Convertisseur électrique selon l'une quelconque des revendications précédentes, dans lequel l'unité de commande (20) permet d'injecter un signal de tension de mode commun aux troisième et quatrième nœuds intermédiaires (q, r) de manière à commander une tension aux bornes du condensateur de mode commun (C_{CM}), comprenant de préférence des moyens de mesure permettant de mesurer un signal de tension au niveau du nœud de tension moyenne (m) et au niveau de nœuds (a, b, c) des au moins trois phases, dans lequel le dispositif de commande permet de déterminer le signal de tension de mode commun injecté aux troisième et quatrième nœuds intermédiaires (q, r) sur la base des signaux de tension mesurés, de préférence dans lequel l'unité de commande permet d'ajouter un décalage à des cycles de service de signaux de modulation de largeur d'impulsion commandant le fonctionnement de commutateurs actifs (T_{DC,vp}, T_{DC,vn}) du second étage de convertisseur, permettant ainsi d'obtenir le signal de tension de mode commun injecté dans les troisième et quatrième nœuds intermédiaires (q, r).

13. Système d'entraînement de moteur électrique (30), comprenant le convertisseur électrique selon l'une quelconque des revendications précédentes, comprenant en outre de préférence un moteur électrique comprenant des bobines de stator, dans lequel les bobines de stator sont connectées pour agir en tant que bobine d'arrêt de filtre de mode commun et/ou en tant qu'inductance de mode différentiel de la liaison CC du convertisseur électrique, comprenant de préférence un onduleur de traction permettant d'entraîner le moteur électrique, dans lequel l'onduleur de traction est configuré pour fonctionner en tant second étage de convertisseur lors du fonctionnement du convertisseur électrique.

14. Système de charge de batterie, en particulier permettant de charger des batteries de traction de véhicule électrique, dans lequel le système de charge de batterie comprend une alimentation électrique, l'alimentation électrique comprenant le convertisseur électrique selon l'une quelconque des revendications 1 à 12.

15. Procédé de conversion entre un signal CA ayant au moins trois phases au niveau d'au moins trois nœuds de phase (a, b, c) et un signal CC au niveau d'un nœud haut (p) et d'un nœud bas (n), comprenant la fourniture du convertisseur électrique selon l'une quelconque des revendications 1 à 12, et la commutation par modulation de largeur d'impulsion entre les au moins trois nœuds de phase (a, b, c) et le nœud haut (p) et le nœud bas (n) pour obtenir un signal de tension commuté aux bornes du nœud haut et du nœud bas, dans lequel une période du signal de tension commuté comprend une partie de niveau de tension nulle obtenue en connectant le nœud de phase ayant la plus petite valeur de tension instantanée absolue des au moins trois phases du signal CA à la fois au nœud haut (p) et au nœud bas (n), de préférence dans lequel le signal de tension commuté comprend une deuxième partie de niveau de tension obtenue en connectant le nœud de phase ayant la valeur de tension instantanée la plus élevée des au moins trois phases du signal CA au nœud haut (p), et en connectant le nœud de phase ayant la valeur de tension instantanée la plus basse des au moins trois phases du signal CA au nœud bas (n), de préférence dans lequel le signal de tension commuté comprend une troisième partie de niveau de tension obtenue en connectant le nœud de phase ayant la plus petite valeur de tension instantanée absolue au nœud haut, et en connectant le nœud de phase ayant la valeur de tension instantanée la plus basse des au moins trois phases du signal CA au nœud bas, ou vice versa.
